# EUROPEAN PATENT APPLICATION

(11) **EP 4 799 783 A1**
(43) Date of publication of application: **02.09.2026**
(21) Application number: 26156455.3
(22) Date of filing: 04.02.2026
(51) Int. Cl.: B29B 11/16

(54) **METHOD OF MANUFACTURING A COMPOSITE COMPONENT FOR A GAS TURBINE ENGINE**

(30) Priority: 27.02.2025 US 202519065212
(71) Applicant: General Electric Company, Cincinnati, Ohio 45215 (US)
(72) Inventor: GILBERT, Aaron, Lynn, 01910 (US); XIE, Ming, Evendale, 45215 (US); WANG, Mingchao, Evendale, 45215 (US); KRAY, Nicholas, West Chester, 45069 (US)
(74) Representative: Openshaw & Co.

(57) **Abstract**

A method of manufacturing a composite component (161') having an outer shell (165), an inner hub (167), and a plurality of struts (158) connecting said outer shell and inner hub. An outer shell preform (308) and an inner hub preform (312) are arranged adjacent to one another along a first assembly reference direction (428), and strut warp fiber tows (458) are woven with said outer shell preform and inner hub preform to form strut preforms (306) extending in between. The distance between said outer shell preform and inner hub preform is increased to shift a strut portion (464) of the plurality of strut warp fiber tows to extend in a second assembly direction (429). The strut preforms are formed by weaving strut weft fiber tows (496) and strut interlocking fiber tows (498) with the strut warp fiber tows (458) to form a preform assembly (300).

## Description

### TECHNICAL FIELD

The present disclosure relates to composite components and methods of forming the composite components, particularly, aircraft composite components for aircraft engines.

### BACKGROUND

Turbine engines used in aircraft generally include a fan and a turbo-engine section arranged in flow communication with one another. A combustor is arranged in the turbo-engine to generate combustion gases for driving a turbine in the turbo-engine of the turbine engine, and the turbine may be used to drive the fan. A portion of air flowing into the fan flows through the turbo-engine as core air, and another portion of the air flowing into the fan bypasses the core section and flows through the turbine engine as bypass air. The turbo-engine section may include one or more compressors to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional view of a turbine engine of an aircraft, according to an aspect of the present disclosure.
FIG. 2A is a schematic view of a three-dimensional fiber weave pattern, according to an aspect of the present disclosure.
FIG. 2B is a schematic, cross-sectional view of the fiber weave pattern shown in FIG. 2A taken along line 2B-2B in FIG. 2A, according to an aspect of the present disclosure.
FIG. 2C is a schematic, cross-sectional view of a fiber weave pattern similar to the fiber weave pattern shown in FIG. 2A, but with a different interlocking fiber pattern, according to an aspect of the present disclosure.
FIG. 2D is a schematic, cross-sectional view of a fiber weave pattern similar to the fiber weave pattern shown in FIG. 2A, but with another interlocking fiber pattern, according to an aspect of the present disclosure.
FIG. 3 is a flow chart of a general process of manufacturing a composite component that may be used in the turbine engine of FIG. 1, according to an aspect of the present disclosure.
FIG. 4 is a schematic, forward aft-looking view of a vane structure, taken at plane 4-4 of FIG. 1, according to an aspect of the present disclosure.
FIG. 5 is a schematic, top aft-looking perspective view of the vane structure of FIG. 4, according to an aspect of the present disclosure.
FIG. 6 is a cross-sectional view, taken at plane 6-6 of FIG. 4, through the vane structure of FIG. 4, according to an aspect of the present disclosure.
FIG. 7 is a schematic, aft-looking layout of a preform assembly used in manufacturing a composite component, according to an aspect of the present disclosure.
FIG. 8 is a side view of the three-dimensional fabric outer shell preform, according to an aspect of the present disclosure.
FIG. 9 is a side view of the three-dimensional fabric inner hub preform, according to an aspect of the present disclosure.
FIG. 10 is an enlarged detail view of a first outer shell connecting end, taken at detail view 324 of FIG. 8, according to an aspect of the present disclosure.
FIG. 11 is an enlarged detail view of a second outer shell connecting end, taken at detail view 326 of FIG. 8, according to an aspect of the present disclosure.
FIG. 12 is an enlarged detail view of an outer shell connection, taken at detail view 334 of FIG. 7, according to an aspect of the present disclosure.
FIG. 13 is an enlarged detail view of a first inner hub connecting end, taken at detail view 338 of FIG. 9, according to an aspect of the present disclosure.
FIG. 14 is an enlarged detail view of a second inner hub connecting end, taken at detail view 340 of FIG. 9, according to an aspect of the present disclosure.
FIG. 15 is an enlarged detail view of an inner hub connection, taken at detail view 348 of FIG. 7, according to an aspect of the present disclosure.
FIG. 16 depicts an alternate outer shell connection to that shown in FIG. 12, and an alternate inner hub connection to that shown in FIG. 15, according to an aspect of the present disclosure.
FIG. 17 is an enlarged detail view of a portion of the outer shell preform of FIG. 8, taken at detail view 376 of FIG. 8, according to an aspect of the present disclosure.
FIG. 18 is an enlarged detail view of a portion of the inner hub preform of FIG. 9, taken at detail view 402 of FIG. 9, according to an aspect of the present disclosure.
FIG. 19 is a side view of an assembly layout of the outer shell preform and the inner hub preform during a process of forming the preform assembly, according to an aspect of the present disclosure.
FIG. 20 is a side view of an assembly layout of the outer shell preform, the inner hub preform, and strut preform fiber tows during a process of forming the preform assembly, according to an aspect of the present disclosure.
FIG. 21 is an enlarged view of a first-connection portion of a strut preform and the inner hub preform, taken at detail view 466 of FIG. 20, according to an aspect of the present disclosure.
FIG. 22 is an enlarged view of a second-connection portion of a strut preform and the outer shell preform, taken at detail view 486 of FIG. 20, according to an aspect of the present disclosure.
FIG. 23 is a side view of the assembly layout of the outer shell preform, the inner hub preform, and the strut warp fiber tows of FIG. 20 during another process of forming the preform assembly, according to an aspect of the present disclosure.
FIG. 24 is an enlarged view of a portion of the assembly layout of FIG. 23, taken at detail view 500 of FIG. 23, according to an aspect of the present disclosure.
FIG. 25 is a schematic view of a mold tooling structure that may be utilized in manufacturing the guide vane structure of FIG. 4, according to an aspect of the present disclosure.
FIG. 26 is an enlarged view of a portion of the preform assembly of FIG. 7, taken at detail view 520 of FIG. 7, according to an aspect of the present disclosure.
FIG. 27 is an enlarged view of a portion of the preform assembly of FIG. 26, taken at detail view 530 of FIG. 26, according to an aspect of the present disclosure.
FIG. 28 is a side view of an alternate assembly layout of the outer shell preform, the inner hub preform, and alternate strut preform fiber tows during a process of forming the preform assembly of FIG. 7, according to an aspect of the present disclosure.
FIG. 29 is a schematic, forward aft-looking view of an alternate vane structure to that shown in FIG. 4, according to an aspect of the present disclosure.
FIG. 30 is a schematic, aft-looking layout of an alternate preform assembly to that of FIG. 7 used in manufacturing the alternate vane structure of FIG. 29, according to an aspect of the present disclosure.
FIG. 31 is a side view of an assembly layout of the outer shell preform, the inner hub preform, and the second outer shell preform during a process of forming the alternate preform assembly of FIG. 30, according to an aspect of the present disclosure.
FIG. 32 is an enlarged view of a portion of the second outer shell preform, taken at detail view 596 of FIG. 31, according to an aspect of the present disclosure.
FIG. 33 depicts an example of a process to integrally weave the strut preforms with the outer shell preform and the inner hub preform, and to integrally weave the strut preforms with the outer shell preform and the second outer shell preform, according to an aspect of the present disclosure.
FIG. 34 is an enlarged view of a first-connection portion and the inner hub preform, taken at detail view 638 of FIG. 33, according to an aspect of the present disclosure.
FIG. 35 is an enlarged view of a second-connection portion and the outer shell preform, taken at detail view 652 of FIG. 33, according to an aspect of the present disclosure.
FIG. 36 is an enlarged view of a third-connection portion and the second outer shell preform, taken at detail view 660 of FIG. 33, according to an aspect of the present disclosure.
FIG. 37 is a side view of the assembly layout of the outer shell preform, the inner hub preform, the second outer shell preform, and the continuing strut warp fiber tows of FIG. 33 during another process of forming the alternate preform assembly, according to an aspect of the present disclosure.
FIG. 38 is an enlarged view of a portion of the assembly layout of FIG. 37, taken at detail view 672 of FIG. 37, according to an aspect of the present disclosure.
FIG. 39A and FIG. 39B, together, depict a flowchart of process steps for a method of manufacturing a composite component, according to an aspect of the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially" is not to be limited to the precise value specified. In at least some instances, the approximating language may correspond to the precision of an instrument for measuring the value, or the precision of the methods or the machines for constructing or manufacturing the components and/or systems. For example, the approximating language may refer to being within a one, two, four, ten, fifteen, or twenty percent margin in either individual values, range(s) of values, and/or endpoints defining range(s) of values.

The terms "vane" and "strut" may be used interchangeably herein, and generally refer to a structural component implemented to provide structural support between two circular (or cylindrical or conical) elements of a gas turbine engine, to redirect a flow of air passing through two circular (or cylindrical or conical) elements, or both.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC). The composite may be formed of a matrix material and a reinforcing element, such as a fiber (referred to herein as a reinforcing fiber).

As used herein "reinforcing fibers" may include, for example glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle.

"Preform" as used herein is a piece of three-dimensional woven fabric formed by a plurality of reinforcing fibers including warp fiber tows and weft fiber tows.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. Adhesives can include resin and phenolics, wherein the adhesive can require curing at elevated temperatures or other hardening techniques.

As used herein, PMC refers to a class of materials. The PMC material may be a prepreg. A prepreg is a reinforcement material (e.g., a reinforcing fiber) pre-impregnated with a polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers.

Resins for matrix materials of PMCs can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven fabric. Woven fabrics can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide, SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods including but not limited to melt infiltration, chemical vapor infiltration, polymer impregnation pyrolysis (PIP), or any combination thereof.

The term "metallic" as used herein is indicative of a material that includes metal such as, but not limited to, titanium, iron, aluminum, stainless steel, and nickel alloys. A metallic material or an alloy can be a combination of at least two or more elements or materials, where at least one is a metal.

Traditional two-dimensional (2D) layup designs typically used for forming composite gas turbine engine components are challenging to manufacture and may have limited interlaminar strength. Specifically, composite components for gas turbine engines are generally constructed with hand laid plies or by combining multiple woven or prefabricated preforms into one molded part. Hand layup or assembly of preforms increases the labor and costs required to build the component. Assembly of preforms also comes with assembly and positioning challenges. Moreover, a composite component formed from 2D plies or multiple preforms will be more likely to have limited interlaminar loading capability.

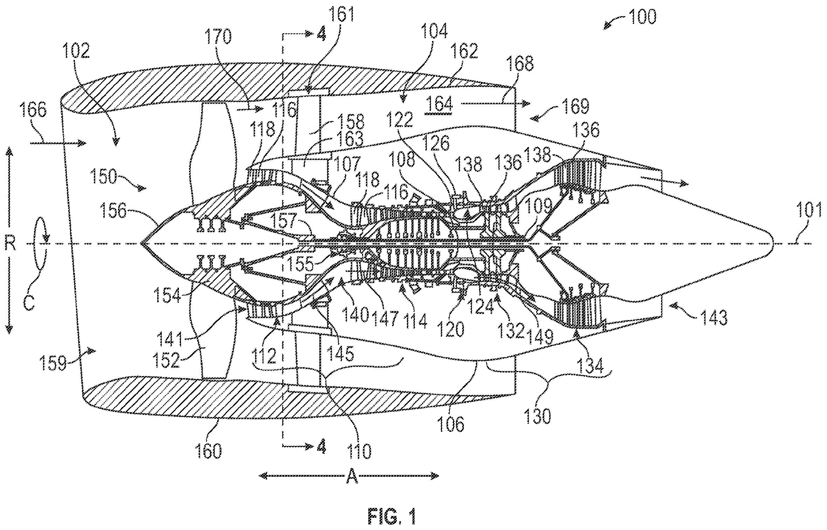

The composite materials discussed herein may be particularly suitable for use in turbine engines for an aircraft. FIG. 1 is a schematic, cross-sectional view a turbine engine 100 that may be used on an aircraft (not shown). The turbine engine 100 has an axial direction A (extending parallel to a longitudinal centerline axis 101, shown for reference in FIG. 1), a radial direction R, and a circumferential direction. C. The circumferential direction C extends in a direction rotating about the longitudinal centerline axis 101 (e.g., rotating about the axial direction A). In the embodiment depicted in FIG. 1, the turbine engine 100 is a high bypass turbofan engine, including a fan section 102 and a turbo-engine 104 disposed downstream from the fan section 102. While FIG. 1 depicts a high bypass turbofan engine, the present disclosure is not limited to being implemented in a high bypass turbofan engine and may be implemented in other types of engines instead, including turbojet engines, turboprop engines, or turbo machinery in general.

The turbo-engine 104 depicted in FIG. 1 includes a generally tubular outer casing 106 that defines a core inlet 141, which is an annular inlet about the longitudinal centerline axis 101. The outer casing 106 encases the turbo-engine 104, and the turbo-engine 104 includes, in a serial flow relationship, a compressor section 110, including a booster or a low-pressure (LP) compressor 112 and a high-pressure (HP) compressor 114, a combustion section 120, a turbine section 130, including a high-pressure (HP) turbine 132 and a low-pressure (LP) turbine 134, and a core air exhaust nozzle 143. The compressor section 110, the combustion section 120, the turbine section 130, and the core air exhaust nozzle 143 together define, at least in part, a core air flow path 140 extending from the core inlet 141 to the core air exhaust nozzle 143, and through which a core air 145 flows.

Each of the LP compressor 112 and the HP compressor 114 may include a plurality of compressor stages. In each stage, a set of compressor blades 116 rotate relative to a corresponding set of static compressor vanes 118 to compress or to pressurize the core air 145 passing through the stage. In a single compressor stage, the set of the compressor blades 116 can be provided in a ring, extending radially outwardly (in the radial direction R) relative to the longitudinal centerline axis 101 from a compressor rotor (shown generally) that includes a disk. The corresponding static compressor vanes 118 are positioned upstream of and adjacent to the rotating compressor blades 116. The compressor vanes 118, for a stage of the compressor, can be mounted to a core casing 107 in a circumferential arrangement. The core casing 107 may define, at least in part, the core air flow path 140. Each compressor stage may be used to sequentially compress the core air 145 flowing through the core air flow path 140, generating compressed air 147. Any suitable number of compressor blades 116, compressor vanes 118, and compressor stages may be used.

Each of the HP turbine 132 and the LP turbine 134 also may include a plurality of turbine stages. In each stage, a set of turbine blades 136 rotates relative to a corresponding set of static turbine vanes 138 to extract energy from combustion gases 149 passing through the stage. The turbine blades 136 may be a part of a turbine rotor (shown generally). Any suitable configuration for a turbine rotor may be used, including, for example, a disk with the plurality of turbine blades 136 extending from the disk. The corresponding static turbine vanes 138 are positioned upstream of and adjacent to the rotating turbine blades 136. The turbine vanes 138, for a stage of the turbine, can be mounted to the core casing 107 in a circumferential arrangement.

In the combustion section 120, fuel (not shown) is received from a fuel system (not shown), and is injected into a combustion chamber 124 of a combustor 122 by fuel nozzles 126. The fuel is mixed with the compressed air 147 from the compressor section 110 to form a fuel and air mixture (not shown), which is ignited and burned in the combustor 122, generating combustion products (i.e., combustion gases 149) within the combustor 122. The combustion gases 149 are discharged from the combustion chamber 124 to the turbine section 130. The combustion gases 149 may be directed into the turbine blades 136 of the HP turbine 132 and, then, into the turbine blades 136 of the LP turbine 134, such that the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The turbine engine 100 and, more specifically, the turbo-engine 104 further includes one or more drive shafts. More specifically, the turbo-engine 104 includes a high-pressure (HP) shaft 108 drivingly connecting the HP turbine 132 to the HP compressor 114, and a low-pressure (LP) shaft 109 drivingly connecting the LP turbine 134 to the LP compressor 112. The HP shaft 108 and the LP shaft 109 may also be referred to as spools. More specifically, the HP turbine rotors of the HP turbine 132 are connected to the HP shaft 108, and the HP compressor rotors of the HP compressor 114 are connected to the HP shaft 108. When the turbine blades 136 and, thus, the HP turbine rotors of the HP turbine 132 are rotated by the combustion gases 149 flowing through the core air flow path 140, the HP turbine rotors of the HP turbine 132 rotate the HP compressor rotors and, thus, the compressor blades 116 of the HP compressor 114 via the HP shaft 108. Similarly, the LP turbine rotors of the LP turbine 134 are connected to the LP shaft 109, and the LP compressor rotors of the LP compressor 112 are connected to the LP shaft 109. When the LP turbine rotors and, thus, LP the turbine blades 136 of the LP turbine 134 are rotated by the combustion gases 149 flowing through the core air flow path 140, the LP turbine rotors of the LP turbine 134 rotate the LP compressor rotors and, thus, the compressor blades 116 of the LP compressor 112 via the LP shaft 109. The HP shaft 108 and the LP shaft 109 are disposed coaxially about the longitudinal centerline axis 101. The HP shaft 108 has a greater diameter than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the HP/LP compressor rotors and the HP/LP turbine rotors.

The fan section 102 shown in FIG. 1 includes a fan 150 having a plurality of fan blades 152 coupled to a disk 154. The fan blades 152 and the disk 154 are connected to a fan shaft 157, which is connected to a reduction gearbox 155 that is connected with and driven by the LP shaft 109. Thus, the fan blades 152 and the disk 154 are rotatable, together, about the longitudinal centerline axis 101 and are driven by rotation of the LP shaft 109. The disk 154 is covered by a rotatable fan hub 156 that is aerodynamically contoured to promote an airflow through the plurality of fan blades 152.

Further, a nacelle 160 circumferentially surrounds the fan 150, or at least a portion of the turbo-engine 104, or both. The nacelle 160 may also be referred to as an annular fan casing or an outer nacelle. The nacelle 160 is supported relative to the turbo-engine 104 by a plurality of circumferentially spaced guide vanes (or struts) 158 (two shown in FIG. 1) that are part of a vane structure 161 that is connected to an intermediate frame structure 163. The vane structure 161 will be described in more detail below, and the vane structure 161 may be one example of a composite component 161' that may be implemented in the turbine engine 100. A downstream section 162 of the nacelle 160 extends over an outer portion of the turbo-engine 104 and, more specifically, a downstream portion of the outer casing 106 so as to define a bypass airflow passage 164 therebetween.

During operation of the turbine engine 100, a volume of air 166 enters the turbine engine 100 through an inlet 159 of the nacelle 160, or the fan section 102, or both. As the volume of air 166 passes across the fan blades 152, a first portion of the air 166 is propelled by the fan blades 152 to generate a swirled fan airflow 170 that is directed or routed toward the guide vanes 158, where the swirled fan airflow 170 may be redirected by the guide vanes 158 from the swirled fan airflow 170 to be an axial airflow in the axial direction A and into the bypass airflow passage 164 as bypass air 168. A second portion of air 166 (shown schematically as core air 145) is directed or is routed into the core inlet 141 to an upstream section of the core air flow path 140. Simultaneously, with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as other suitable numbers or arrangements of shafts, compressors, turbines, fans, etc. Further, although the turbine engine 100 is shown as a direct drive, fixed-pitch turbofan engine, in other embodiments, the turbine engine 100 may be a geared turbine engine (e.g., including a gearbox between the fan 150 and a shaft driving the fan, such as the LP shaft 109), may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

The turbine engine 100 discussed herein is suitable for use on an aircraft. Some suitable aircraft include, for example, an airplane, a helicopter, and an unmanned aerial vehicle (UAV). In other embodiments, the turbine engine may be any other turbine engine, such as an industrial turbine engine incorporated into a power generation system, or a nautical turbine engine on a ship or other vessel.

Various components of the turbine engine 100 may be formed from composite materials. These components are referred to herein as composite components. The fan blades 152, a fan casing having the guide vanes 158. The compressor blades 116, and the compressor vanes 118 may be made from PMC materials, for example. Other composites, such as CMC materials, may be used for other components, including, for example, the turbine blades 136, the turbine vanes 138, and components of the combustion section 120 such as combustor liners used to form the combustion chamber 124. Moreover, although the embodiments are described relative to a turbine engine 100, the composite component and methods of manufacturing may be used to form composite components used in applications beyond turbine engines.

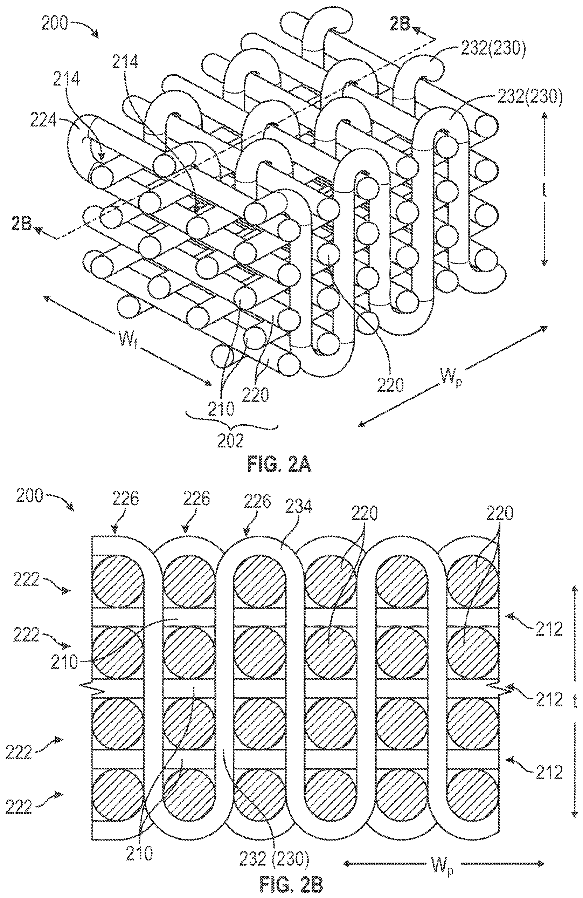

FIG. 2A is a schematic view showing an exemplary three-dimensional fiber weave pattern that may be used to form a three-dimensional woven fabric 200. FIG. 2B is a schematic, cross-sectional view taken along plane 2B-2B in FIG. 2A. In embodiments discussed herein, the composite components may be formed from a plurality of reinforcing fibers and, more specifically, a plurality of reinforcing fiber tows 202. The plurality of reinforcing fiber tows 202 are woven together in a three-dimensional pattern to form the three-dimensional woven fabric 200. The plurality of reinforcing fiber tows 202 include a plurality of first fiber tows, which, in this embodiment, is a plurality of warp fiber tows 210. The plurality of reinforcing fiber tows 202 also include a plurality of second fiber tows, which, in this embodiment, is a plurality of weft fiber tows 220. The weft fiber tows 220 are oriented transversely to the warp fiber tows 210, and, in the depicted embodiment, the warp fiber tows 210 and the weft fiber tows 220 are oriented generally orthogonally to each other. The woven fabric 200 thus includes a warp direction Wp (also referred to as a first direction) and a weft direction Wf (also referred to as a second direction). The warp fiber tows 210 extend in the warp direction Wp and the weft fiber tows 220 extend in the weft direction Wf.

In the depicted embodiment, the woven fabric 200 is a three-dimensional woven fabric and the woven fabric 200 also includes a thickness direction t. The thickness direction t may also be referred to as a z direction. The warp fiber tows 210 are arrayed in both the weft direction Wf and the thickness direction t. The warp fiber tows 210 may be parallel to each other in both the weft direction Wf and the thickness direction t, and the woven fabric 200 may include a plurality of warp fiber layers 212 in the thickness direction t and a plurality of warp fiber columns 214 in the weft direction Wf. Three warp fiber layers 212 are depicted in FIGS. 2A and 2B, but the woven fabric 200 may include any other numbers of warp fiber layers 212, including more than three warp fiber layers 212.

During a weaving process, the warp fiber tows 210 may be held in tension in the warp direction Wp, and one of the weft fiber tows 220 is passed or drawn therethrough. A shuttle (not shown) may be used to draw the one of the weft fiber tows 220 through the warp fiber tows 210. The shuttle may be passed through the warp fiber tows 210 in a first direction and then reversed to pass through the warp fiber tows 210 at a different height in a thickness direction t, thereby forming a plurality of weft fiber layers 222 in the thickness direction t. One of the weft fiber tows 220 may be continuous through at least a portion of the thickness of the woven fabric 200, and the one of the weft fiber tows 220 may include a portion extending in the thickness direction t, which may be referred to in some embodiments as a turnaround. This portion of the weft fiber tows 220 thus may be referred to herein as a turnaround portion 224. The warp fiber tows 210 may be moved relative to each other to allow a space for the one of the weft fiber tows 220 to pass through the space. The warp fiber tows 210 may be moved relative to each other in different ways to create different patterns. In this way, weaving the woven fabric 200 includes positioning the warp fiber tows 210 (e.g., such that the warp fiber tows 210 are held stationary in tension), then laying the weft fiber tows 220 (e.g., such that the weft fiber tows 220 are drawn through and inserted over and under the corresponding warp fiber tows 210), and repeating this process until the woven fabric 200 is formed. The weft fiber tows 220 may be parallel to each other in both the warp direction Wp and the thickness direction t, and the woven fabric 200 may include the plurality of weft fiber layers 222 in the thickness direction t and a plurality of weft fiber columns 226 in the warp direction Wp.

The woven fabric 200 also includes a plurality of interlocking fiber tows 230 (also referred to as Z-weaver fiber tows). The interlocking fiber tows 230 are additional warp fiber tows that are directed through the thickness of the woven fabric 200 during weaving to stitch the plurality of reinforcing fiber tows 202 together. The interlocking fiber tows 230 are woven to extend between two or more of the weft fiber layers 222. Different fiber patterns may be used for the interlocking fiber tows 230. A first interlocking fiber pattern, shown in FIGS. 2A and 2B, is an orthogonal interlocking pattern, and the interlocking fiber tows 230 are referred to herein as orthogonal interlocking fiber tows 232. In this pattern, the orthogonal interlocking fiber tows 232 extend substantially in a direction that is orthogonal to the warp direction Wp, which is the thickness direction t in the depicted embodiment. As with the weft fiber tows 220, the interlocking fiber tows 230 (e.g., the orthogonal interlocking fiber tows 232) may include a turnaround portion 234. In the depicted embodiment, the turnaround portion 234 of the orthogonal interlocking fiber tows 232 is positioned to form an alternating pattern between each warp fiber column 214. In the depicted embodiment, the orthogonal interlocking fiber tows 232 extend through the thickness of the woven fabric 200 and may be referred to as through-thickness interlocking fiber tows, but other thicknesses may be used.

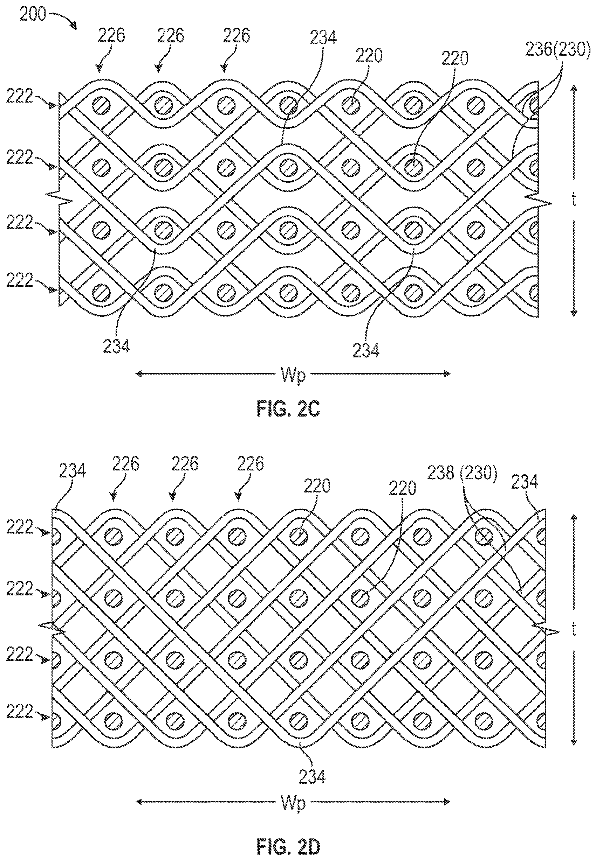

A second interlocking fiber pattern, shown in FIG. 2C, is an angle interlock pattern and, more specifically, a layer-to-layer angle interlock pattern. FIG. 2C is a cross-sectional view of a woven fabric taken from a perspective similar to FIG. 2B. The interlocking fiber tows 230 are referred to in this embodiment as angled interlocking fiber tows 236. Instead of extending orthogonally through the woven fabric 200, the angled interlocking fiber tows 236 form an oblique angle relative to the warp direction Wp. In the depicted embodiment, the angled interlocking fiber tows 236 extend through adjacent weft fiber layers 222 in an alternating or a sinusoidal pattern to interlock these adjacent layers with each other, with the oblique angle formed between adjacent turnaround portions 234 of the angled interlocking fiber tows 236. The turnaround portions 234 of the angled interlocking fiber tows 236 are located on every other weft fiber columns 226, but, in other embodiments, two or more weft fiber columns 226 may be between adjacent turnaround portions 234 of the angled interlocking fiber tows 236. In other embodiments, the angled interlocking fiber tows 236 may extend between more than two adjacent weft fiber layers 222. For example, as shown in FIG. 2D, the interlocking fiber tows 230 are through-thickness interlocking fiber tows, which are referred to herein as through-thickness angled interlocking fiber tows 238. FIG. 2D is a cross-sectional view of a woven fabric taken from a perspective similar to FIG. 2B. The weft fiber tows 220 are omitted in FIGS. 2C and 2D for clarity.

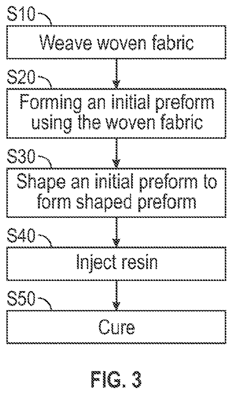

FIG. 3 is a flow chart of a general process of manufacturing a composite component that may be used in the turbine engine of FIG. 1. The method includes, in step S10 weaving the woven fabric 200, such as on a loom. In step S20, the method includes forming an initial preform using one or more pieces of woven fabric 200. This step may include, for example, laying up a plurality of woven fabrics 200 or otherwise positioning the plurality of woven fabrics 200 relative to each other to form the initial preform. In step S30, the initial preform is shaped to form a shaped preform. Shaping the initial preform may include, for example, using a mold tooling structure to shape the initial preform. Suitable shaping processes may include vacuum forming or other forming processes to impart a shape to the initial preform. The shaped preform may form a final preform, but optionally, additional machining processes and manufacturing processes, such as adding inserts, may be carried out on the shaped preform to form the final preform.

After the preform is complete (i.e., the final preform), a matrix material may be injected into the preform in step S40 to generate an infiltrated (or an impregnated) preform. When the composite component is a polymer matrix composite, polymers, a resin, or both, may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes may be used in this step depending upon the matrix material. As noted above, the preform may be formed using prepreg fiber tows, and, in such an embodiment, this step (step S40) may be omitted.

The method continues with curing the infiltrated preform in step S50 to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material.

Further, the composite component may be finish machined as needed. Finish machining may define the final finished shape or contour of the composite component. For example, when the composite component is a fan blade 152 (FIG. 1), the edges of the fan blade 152 may be machined to define the final airfoil shape or the contour of the fan blade. Additionally, the composite component can be coated with one or more suitable coatings, such as, e.g., an environmental barrier coating (EBC) or a polyurethane surface coating.

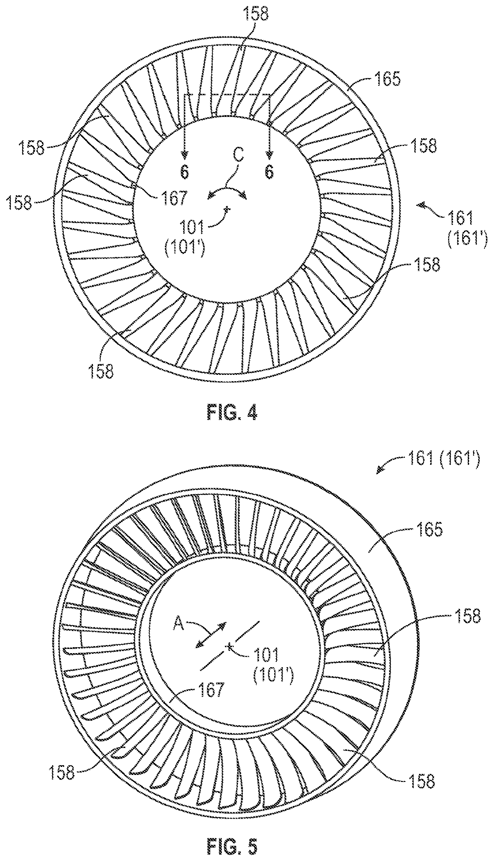

FIG. 4 is a schematic, forward aft-looking view of the vane structure 161, taken at plane 4-4 of FIG. 1, according to an aspect of the present disclosure. FIG. 5 is a schematic, top aft-looking perspective view of the vane structure 161 of FIG. 4, according to an aspect of the present disclosure. Referring collectively to FIG. 4 and FIG. 5, only the vane structure 161 is shown, with other elements of FIG. 1 (e.g., the nacelle 160 and the turbo-engine components within the outer casing 106) being omitted merely for clarity. In FIG. 4 and FIG. 5, the vane structure 161 may be an outlet guide vane structure arranged downstream of the fan 150 and that includes the guide vanes 158 of FIG. 1. However, the vane structure 161 is not limited to an outlet guide vane structure and, in other aspects, the vane structure 161 may be an inlet guide vane structure, or may be a stator vane structure that may be implemented in the compressor section 110 or in the turbine section 130 of the turbo-engine 104.

As shown in FIG. 4, and as will be described in more detail below, the vane structure 161 includes an outer shell 165 that extends circumferentially about a vane structure centerline axis 101', which is congruent to the longitudinal centerline axis 101 of the turbine engine 100, and also extends in the axial direction A (FIG. 1). The vane structure 161 also includes an inner hub 167 that extends circumferentially about the vane structure centerline axis 101' and that extends in the axial direction A. The plurality of guide vanes 158 (also referred to as struts) extend between the outer shell 165 and the inner hub 167, and are circumferentially spaced apart from one another about the vane structure centerline axis 101' and connect the outer shell 165 and the inner hub 167 together. The vane structure 161 is an example of a composite component 161' that may be implemented in the turbine engine 100 and a description of a composite vane structure and a method of manufacturing the composite vane structure will be described in more detail below.

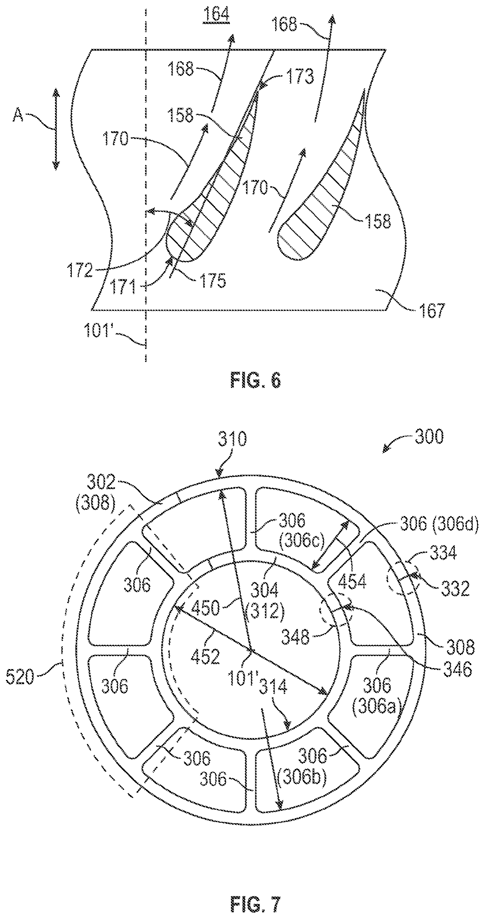

FIG. 6 is a cross-sectional view, taken at plane 6-6 of FIG. 4, through the vane structure 161 of FIG. 4, according to an aspect of the present disclosure. As shown in FIG. 6, the guide vanes 158 of the vane structure 161 may have an airfoil shape (e.g., a NACA (National Advisory Committee for Aeronautics) airfoil shape) and may include camber so as to be a curved vane. In this manner, the guide vanes 158 can receive the swirled fan airflow 170 and redirect the swirled fan airflow 170 to be an axial airflow flowing in the axial direction A into the bypass airflow passage 164 as the bypass air 168. Further, each of the guide vanes 158 may be arranged at an angle 172 with respect to the vane structure centerline axis 101', where the angle 172 is taken along a chord 175 of the guide vane 158 from a leading edge 171 to a trailing edge 173 of the guide vane 158.

FIG. 7 is a schematic, aft-looking layout of a preform assembly 300 used in manufacturing a composite component, according to an aspect of the present disclosure. More particularly, the preform assembly 300 of FIG. 7 is configured for manufacturing a vane assembly, such as the vane structure 161 of FIG. 4 and FIG. 5. Generally, a preform assembly consists of multiple woven fabric component parts that are joined together to form a general shape of the overall structure of the composite component. As will be described below, the overall preform assembly 300 is then installed in a mold tooling structure and a resin material is injected into the mold tooling structure and a curing process is applied to the mold tooling structure to form a general shape of the composite component. FIG. 7 depicts the preform assembly 300 as the preform assembly 300 may appear assembled within the mold tooling structure (with the mold tooling structure being omitted in FIG. 7) and when the mold tooling structure is ready for the injection of the resin material. A process to obtain the preform assembly 300 as shown in FIG. 7 will be described in more detail below.

In FIG. 7, the preform assembly 300 includes an outer shell preform 302, an inner hub preform 304, and a plurality of strut preforms 306. As will be described below, the outer shell preform 302 may be woven as a generally linear three-dimensional fabric outer shell preform 308 that includes connecting ends (described below) that are connected together to form an outer shell hoop preform 310 that extends circumferentially about the vane structure centerline axis 101'. Similarly, the inner hub preform 304 may be woven as a generally linear three-dimensional fabric inner hub preform 312 that includes connecting ends (described below) that are connected together to form an inner hub hoop preform 314 that extends circumferentially about the vane structure centerline axis 101'. The plurality of strut preforms 306 are circumferentially spaced apart and extend between, and connect, the outer shell hoop preform 310 with the inner hub hoop preform 314. FIG. 7 depicts eight strut preforms 306 extending between the outer shell hoop preform 310 and the inner hub hoop preform 314, and each strut preform 306 corresponds to a respective guide vane 158 (FIG. 4) of the vane structure 161 for which the preform assembly 300 is utilized in manufacturing the vane structure 161. While FIG. 4 and FIG. 5 depict more than eight guide vanes 158, each corresponding to a respective strut preform 306, the depiction of eight strut preforms 306 in FIG. 7 is merely for brevity and clarity of the following description. In manufacturing the vane structure 161 of FIG. 4, the number of strut preforms 306 included in the preform assembly 300 would correspond to the number of guide vanes 158 included in the vane structure 161 of FIG. 4.

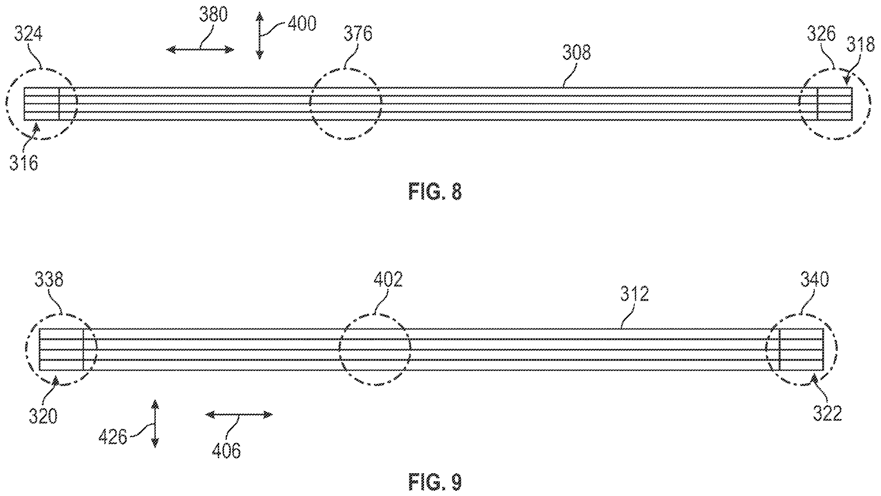

FIG. 8 is a side view of the three-dimensional fabric outer shell preform 308, according to an aspect of the present disclosure. The three-dimensional fabric outer shell preform 308 is woven as any one of the three-dimensional preforms as described above with regard to FIG. 2A, FIG. 2B, FIG. 2C, and FIG. 2D. The three-dimensional fabric outer shell preform 308 is woven to include a first outer shell connecting end 316 and a second outer shell connecting end 318 that, as will be described in more detail below, are connected together to form the outer shell hoop preform 310 (FIG. 7).

FIG. 9 is a side view of the three-dimensional fabric inner hub preform 312, according to an aspect of the present disclosure. The three-dimensional fabric inner hub preform 312 is woven as any one of the three-dimensional preforms as described above with regard to FIG. 2A, FIG. 2B, FIG. 2C, and FIG. 2D. The three-dimensional fabric inner hub preform 312 is woven to include a first inner hub connecting end 320 and a second inner hub connecting end 322 that, as will be described in more detail below, are connected together to form the inner hub hoop preform 314 (FIG. 7).

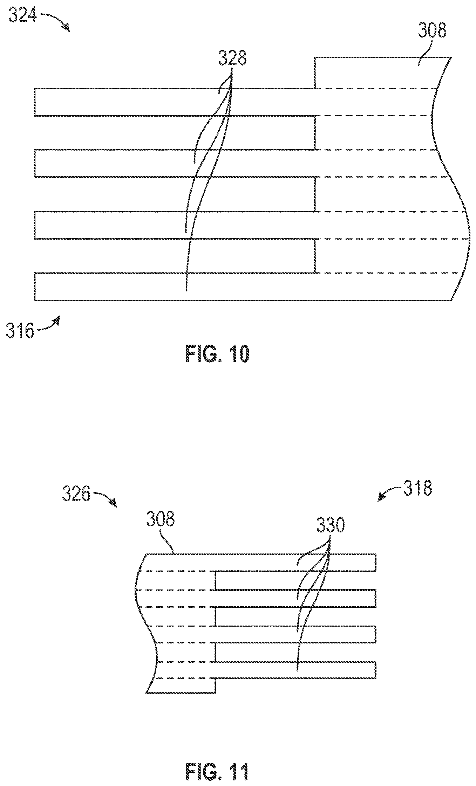

FIG. 10 is an enlarged view of the first outer shell connecting end 316, taken at detail view 324 of FIG. 8, according to an aspect of the present disclosure. FIG. 11 is an enlarged view of the second outer shell connecting end 318 taken at detail view 326 of FIG. 8, according to an aspect of the present disclosure. As shown in FIG. 10, the first outer shell connecting end 316 may include a plurality of first end bifurcated layers 328. As shown in FIG. 11, the second outer shell connecting end 318 may include a plurality of second end bifurcated layers 330.

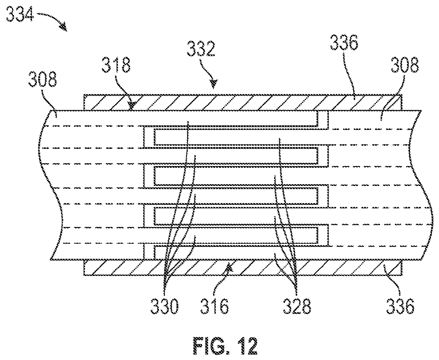

FIG. 12 is an enlarged detail view of an outer shell connection 332, taken at detail view 334 of FIG. 7, according to an aspect of the present disclosure. As shown in FIG. 12, the first outer shell connecting end 316 is connected with the second outer shell connecting end 318. More specifically, the plurality of first end bifurcated layers 328 of the first outer shell connecting end 316 are joined with, and overlap with, the plurality of second end bifurcated layers 330 of the second outer shell connecting end 318. Thus, the outer shell connection 332 of FIG. 12 is arranged as a finger joint connection. However, the present disclosure is not limited to a finger joint connection and other types of connections may be implemented instead as will be described below.

Once the outer shell connection 332 has been formed, additional preform layers 336 may be added to wrap around the outer shell connection 332. The additional preform layers 336 may be either a three-dimensional fabric layer similar to that described above with regard to any of FIG. 2A, FIG. 2B, FIG. 2C, and FIG. 2D. Alternatively, the additional preform layers 336 may be two-dimensional fabric layers that are overlaid onto the outer shell connection 332.

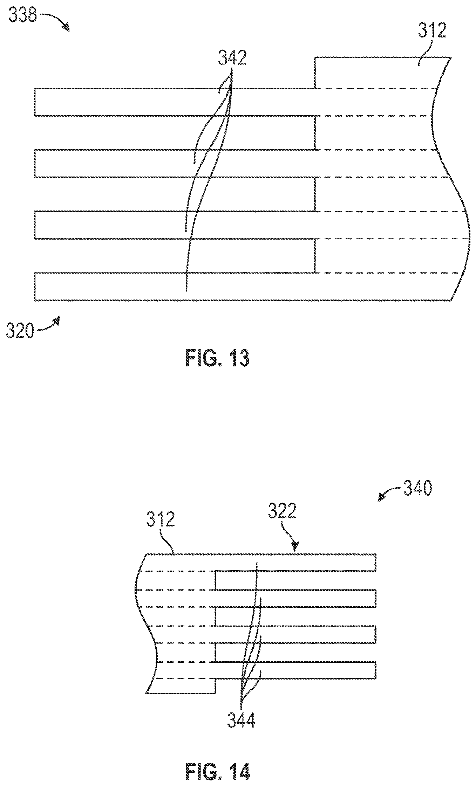

FIG. 13 is an enlarged view of the first inner hub connecting end 320, taken at detail view 338 of FIG. 9, according to an aspect of the present disclosure. FIG. 14 is an enlarged view of the second inner hub connecting end 322, taken at detail view 340 of FIG. 9, according to an aspect of the present disclosure. As shown in FIG. 13, the first inner hub connecting end 320 may include a plurality of first end bifurcated layers 342. As shown in FIG. 14, the second inner hub connecting end 322 may include a plurality of second end bifurcated layers 344.

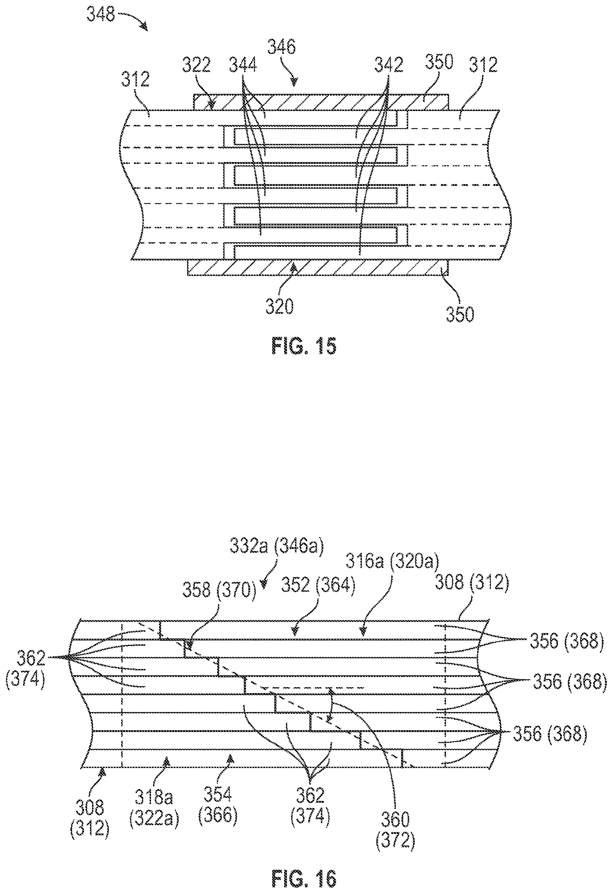

FIG. 15 is an enlarged detail view of an inner hub connection 346, taken at detail view 348 of FIG. 7, according to an aspect of the present disclosure. As shown in FIG. 15, the first inner hub connecting end 320 is connected with the second inner hub connecting end 322. More specifically, the plurality of first end bifurcated layers 342 of the first inner hub connecting end 320 are joined with, and overlap with the plurality of second end bifurcated layers 344 of the second inner hub connecting end 322. Thus, the inner hub connection 346 is arranged as a finger joint connection, although other types of connections may be implemented instead.

Once the inner hub connection 346 has been formed, additional preform layers 350 may be added to wrap around the outer shell connection 332. The additional preform layers 350 may be either a three-dimensional fabric layer similar to that described above with regard to any of FIG. 2A, FIG. 2B, FIG. 2C, and FIG. 2D. Alternatively, the additional preform layers 350 may be two-dimensional fabric layers that are overlaid onto the outer shell connection 332.

FIG. 16 depicts an alternate outer shell connection 332a to that shown in FIG. 12, according to an aspect of the present disclosure. In the FIG. 16 aspect, the outer shell preform 308 includes an alternate first outer shell connecting end 316a and an alternate second outer shell connecting end 318a. The alternate first outer shell connecting end 316a includes a first outer shell scarf joint connecting portion 352 that includes a plurality of first bifurcated layers 356 that are arranged to extend in a staggered manner along a scarf angle line 358 (shown generally as a dashed line), which may have a scarf angle 360, such as forty-five degrees. The scarf angle 360 is not limited to forty-five degrees and other angles may be implemented instead. Similarly, the alternate second outer shell connecting end 318a includes a second outer shell scarf joint connecting portion 354 that includes a plurality of second bifurcated layers 362, which are similarly arranged to extend in a staggered manner along the scarf angle line 358. The plurality of first bifurcated layers 356 and the plurality of second bifurcated layers 362 are joined together along the scarf angle line 358 so as to form the alternate outer shell connection 332a.

Continuing with FIG. 16, the configuration depicted therein is also applicable to form an alternate inner hub connection 346a. Applying FIG. 16 to the inner hub preform 312, the inner hub preform 312 includes an alternate first inner hub connecting end 320a and an alternate second inner hub connecting end 322a. The alternate first inner hub connecting end 320a includes a first inner hub scarf joint connecting portion 364 that includes a plurality of first bifurcated layers 368 that are arranged to extend in a staggered manner along a scarf angle line 370 (shown generally as a dashed line), which may have a scarf angle 372, such as forty-five degrees. The scarf angle 372 is not limited to forty-five degrees and other angles may be implemented instead. Similarly, the alternate second inner hub connecting end 322a includes a second inner hub scarf joint connecting portion 366 that includes a plurality of second bifurcated layers 374, which are similarly arranged to extend in a staggered manner along the scarf angle line 370. The plurality of first bifurcated layers 368 and the plurality of second bifurcated layers 374 are joined together along the scarf angle line 370 so as to form the alternate inner hub connection 346a. While not shown in FIG. 16, additional preform layers similar to the additional preform layers similar to the additional preform layers 336 of FIG. 12 may be applied to the alternate outer shell connection 332a. In addition, while not shown in FIG. 16, additional preform layers similar to the additional preform layers 350 of FIG. 15 may be applied to the alternate inner hub connection 346a. Further, while FIG. 16 depicts the first bifurcated layers 356 and the second bifurcated layers 362 of the alternate outer shell connection 332a being joined in a butt-joint type manner, the first bifurcated layers 356 and the second bifurcated layers 362 may be joined in an overlapping manner instead. Similarly, the first bifurcated layers 368 and the second bifurcated layers 374 of the alternate inner hub connection 346a may also be joined in an overlapping manner instead of being joined in a butt-joint manner as shown in FIG. 16.

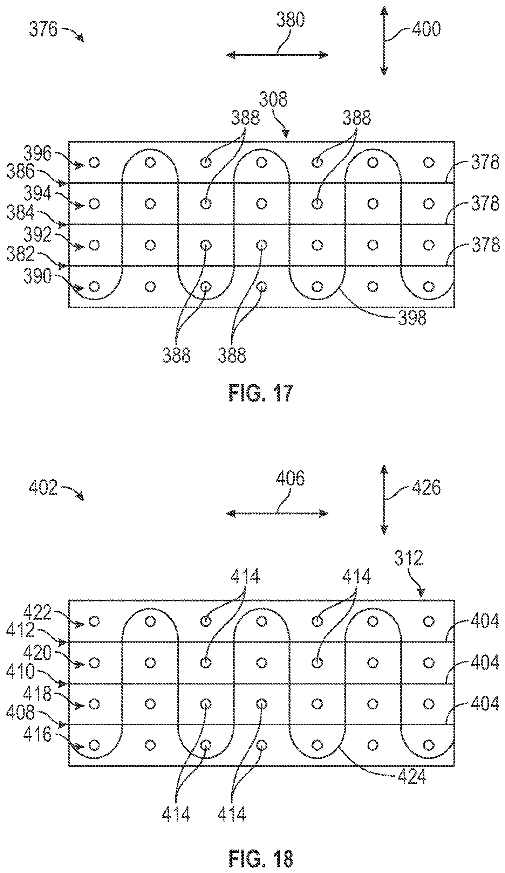

FIG. 17 is an enlarged view of a portion of the outer shell preform 308, taken at detail view 376 of FIG. 8, according to an aspect of the present disclosure. As shown in FIG. 17, the outer shell preform 308 is woven as the three-dimensional fabric preform and includes a plurality of warp fiber tows 378 that extend in a first direction 380 (e.g., in a lengthwise direction), and that are arranged in a plurality warp fiber layers, including a first warp fiber layer 382, a second warp fiber layer 384, and a third warp fiber layer 386. The plurality of warp fiber tows 378 may be similar to the warp fiber tows 210 of FIG. 2A and FIG. 2B, and the plurality of warp fiber layers (i.e., the first warp fiber layer 382, the second warp fiber layer 384, and the third warp fiber layer 386) may be similar to the warp fiber layers 212 of FIG. 2A and FIG. 2B. The outer shell preform 308 also includes a plurality of weft fiber tows 388 that extend in a second direction (not labeled) orthogonal to the first direction 380 (i.e., a direction into and out of the drawing page), and that are arranged in a plurality of weft fiber layers, including a first weft fiber layer 390, a second weft fiber layer 392, a third weft fiber layer 394, and a fourth weft fiber layer 396. The weft fiber tows 388 may be similar to the weft fiber tows 220 of FIG. 2A and FIG. 2B, and the plurality of weft fiber layers (i.e., the first weft fiber layer 390, the second weft fiber layer 392, the third weft fiber layer 394, and the fourth weft fiber layer 396) may be similar to the weft fiber layers 222 of FIG. 2A and FIG. 2B. The outer shell preform 308 also includes a plurality of interlocking fiber tows 398 that extend in a third direction 400 (e.g., a thickness direction), and that may be similar to the interlocking fiber tows 230 of FIG. 2A and FIG. 2B.

FIG. 18 is an enlarged view of a portion of the inner hub preform 312, taken at detail view 402 of FIG. 8, according to an aspect of the present disclosure. As shown in FIG. 18, the inner hub preform 312 is woven as the three-dimensional fabric preform and includes a plurality of warp fiber tows 404 that extend in a first direction 406 (e.g., in a lengthwise direction), and that are arranged in a plurality warp fiber layers, including a first warp fiber layer 408, a second warp fiber layer 410, and a third warp fiber layer 412. The plurality of warp fiber tows 404 may be similar to the warp fiber tows 210 of FIG. 2A and FIG. 2B, and the plurality of warp fiber layers (i.e., the first warp fiber layer 408, the second warp fiber layer 410, and the third warp fiber layer 412) may be similar to the warp fiber layers 212 of FIG. 2A and FIG. 2B. The inner hub preform 312 also includes a plurality of weft fiber tows 414 that extend in a second direction (not labeled) orthogonal to the first direction 406 (i.e., a direction into and out of the drawing page), and that are arranged in a plurality of weft fiber layers, including a first weft fiber layer 416, a second weft fiber layer 418, a third weft fiber layer 420, and a fourth weft fiber layer 422. The weft fiber tows 414 may be similar to the weft fiber tows 220 of FIG. 2A and FIG. 2B, and the plurality of weft fiber layers (i.e., the first weft fiber layer 416, the second weft fiber layer 418, the third weft fiber layer 420, and the fourth weft fiber layer 422) may be similar to the weft fiber layers 222 of FIG. 2A and FIG. 2B. The inner hub preform 312 also includes a plurality of interlocking fiber tows 424 that extend in a third direction 426 (e.g., in a thickness direction), and that may be similar to the interlocking fiber tows 230 of FIG. 2A and FIG. 2B.

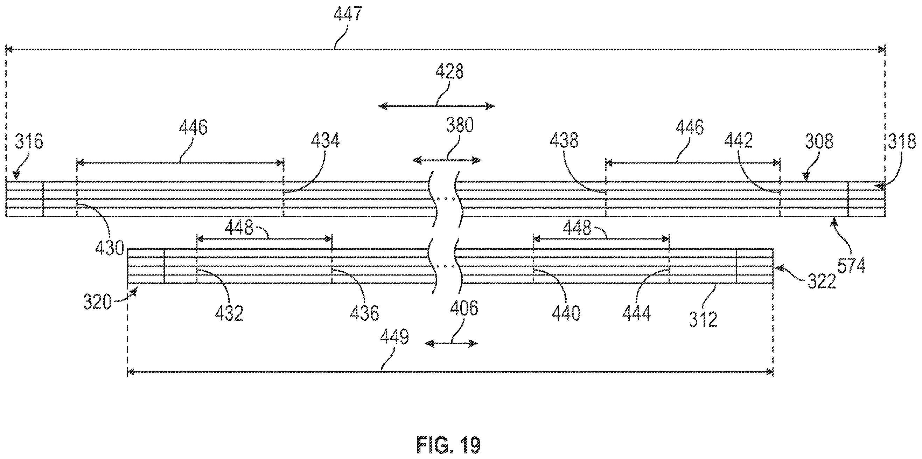

FIG. 19 is a side view of an assembly layout of the outer shell preform 308 and the inner hub preform 312 during a process of forming the preform assembly 300 (FIG. 7), according to an aspect of the present disclosure. In FIG. 19, the outer shell preform 308 is arranged to extend along a first assembly reference layout direction 428 (e.g., a lengthwise direction or a longitudinal direction), and the inner hub preform 312 is also arranged to extend along the first assembly reference layout direction 428. That is, the outer shell preform 308 may be arranged (laid-out, for example) longitudinally to be extended lengthwise in the first assembly reference layout direction 428, and the inner hub preform 312 may be arranged (laid-out, for example) longitudinally to be extended lengthwise in the first assembly reference layout direction 428. The inner hub preform 312 is also arranged adjacent to the outer shell preform 308 so that, as will be described below, the plurality of strut preforms 306 can be integrally woven with the inner hub preform 312 and the outer shell preform 308.

In FIG. 19, reference lines are provided as a reference location of where a strut preform is connected with either the outer shell preform 308 or with the inner hub preform 312. For example, a first reference line 430 indicates a reference location where a first strut preform 306a (FIG. 7) is connected with the outer shell preform 308 and a second reference line 432 indicates a location where the first strut preform 306a is connected with the inner hub preform 312. Similarly, a third reference line 434 indicates a location where a second strut preform 306b (FIG. 7) is connected with the outer shell preform 308 and a fourth reference line 436 indicates a location where the second strut preform 306b is connected with the inner hub preform 312. A fifth reference line 438 indicates a location where a third strut preform 306c (FIG. 7) is connected with the outer shell preform 308 and a sixth reference line 440 indicates a location where the third strut preform 306c is connected with the inner hub preform 312. Similarly, a seventh reference line 442 indicates a location where a fourth strut preform 306d (FIG. 7) is connected with the outer shell preform 308 and an eighth reference line 444 indicates a location where the fourth strut preform 306d is connected with the inner hub preform 312. The first reference line 430 and the third reference line 434 are spaced apart from one another by a distance 446, which corresponds to a circumferential spacing between the first strut preform 306a and the second strut preform 306b on the outer shell preform 308. Similarly, the second reference line 432 and the fourth reference line 436 are spaced apart from one another by a distance 448, which corresponds to a circumferential spacing between the first strut preform 306a and the second strut preform 306b on the inner hub preform 312. As seen in FIG. 7, a diameter 450 of the outer shell hoop preform 310 is greater than a diameter 452 of the inner hub hoop preform 314. Thus, due to the larger diameter 450 of the outer shell preform 308 as compared to the diameter 452 of the inner hub preform 312, when the strut preforms 306 are equally spaced about the inner hub preform 312 and equally spaced about the outer shell preform 308, the distance 446 (FIG. 19) is greater than the distance 448.

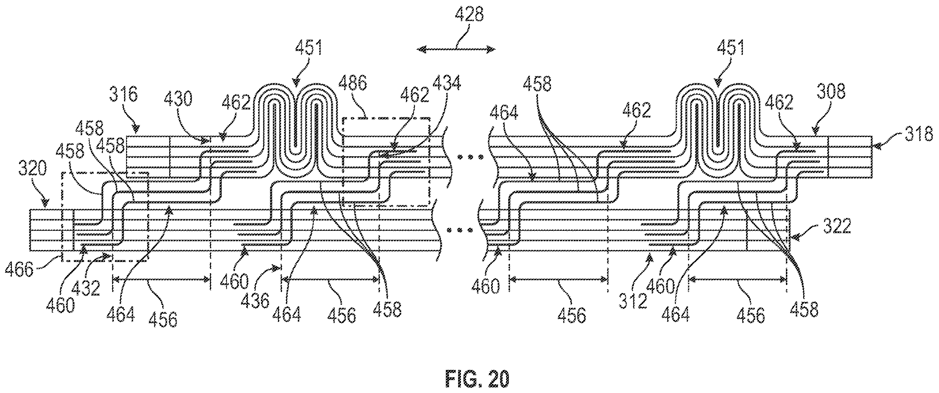

FIG. 20 is a side view of an assembly layout of the outer shell preform 308, the inner hub preform 312, and strut preform fiber tows during a process of forming the preform assembly 300 (FIG. 7), according to an aspect of the present disclosure. FIG. 20 depicts an example of a process to integrally weave the strut preforms 306 (FIG. 7) with the outer shell preform 308 and the inner hub preform 312. In FIG. 20, the outer shell preform 308 is arranged adjacent to the inner hub preform 312 and with respect to the first assembly reference layout direction 428 for connecting each of the plurality of strut preforms 306 to the inner hub preform 312 and to the outer shell preform 308. More particularly, based on a length 454 (FIG. 7) of the strut preforms 306, the outer shell preform 308 and the inner hub preform 312 are arranged so that the first reference line 430 and the second reference line 432 are offset from each other in the first assembly reference layout direction 428 by an offset distance 456. Due to a difference in the distance 446 (FIG. 19) as compared with the distance 448 (FIG. 19) (the distance 446 being greater than the distance 448), and due to a difference of an overall length 447 (FIG. 19) of the outer shell preform 308 as compared with an overall length 449 (FIG. 19) of the inner hub preform 312 (the overall length 447 being greater than the overall length 449), to obtain the offset distance 456 for integrally weaving at least some of the strut preforms 306, undulations 451 may be provided in the outer shell preform 308. The offset distance 456 provides the ability to integrally weave a plurality of strut warp fiber tows 458 with the inner hub preform 312 and with the outer shell preform 308 to form the strut preforms 306. Each of the strut warp fiber tows 458 may be, for example, warp fiber tows similar to the warp fiber tows 210 of the FIG. 2A configuration. As will be described in more detail below, each of the plurality of strut warp fiber tows 458 includes a first-connection portion 460 that is integrally woven with the inner hub preform 312, a second-connection portion 462 that is integrally woven with the outer shell preform 308, and a strut portion 464 defined between the first-connection portion 460 and the second-connection portion 462. The strut portion 464 is woven to extend along the first assembly reference layout direction 428.

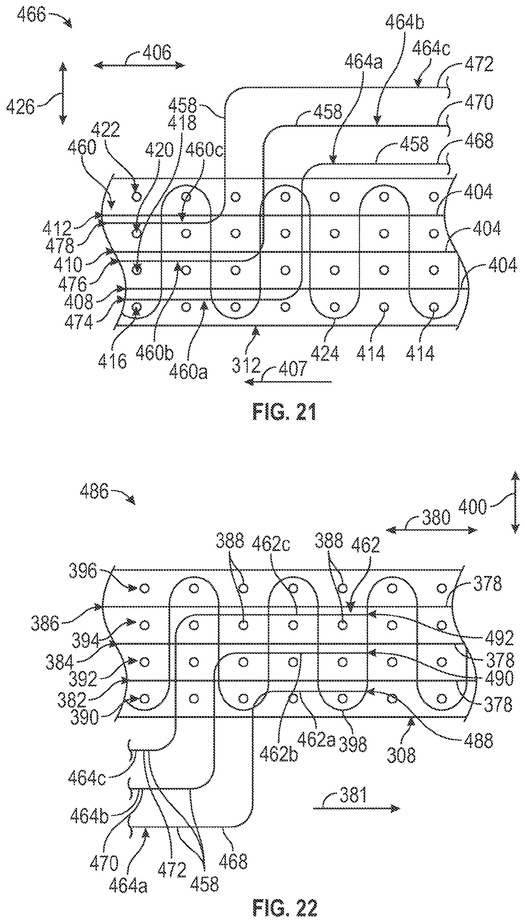

FIG. 21 is an enlarged view of the first-connection portion 460 and the inner hub preform 312, taken at detail view 466 of FIG. 20, according to an aspect of the present disclosure. As shown in FIG. 21, the plurality of strut warp fiber tows 458 may include a first strut warp fiber tow 468, a second strut warp fiber tow 470, and a third strut warp fiber tow 472. While FIG. 21 depicts three strut warp fiber tows 458, greater than three strut warp fiber tows 458 or fewer than three strut warp fiber tows 458 may be included instead. In addition, while FIG. 21 depicts, for example, one first strut warp fiber tow 468, a plurality of first strut warp fiber tows 468 may be included and may be arranged in a row extending in a direction into and out of the planar view of FIG. 21. Thus, the plurality of first strut warp fiber tows 468 may define a first strut warp fiber layer 474 of the first strut warp fiber tows 468 similar to the first warp fiber layer 408 of the warp fiber tows 404 of the inner hub preform 312. Similarly, a plurality of the second strut warp fiber tows 470 may be included and arranged in a row extending in the direction into and out of the planar view of FIG. 21, and may define a second strut warp fiber layer 476. In addition, a plurality of the third strut warp fiber tows 472 may be included and arranged in a row extending in the direction into and out of the planar view of FIG. 21, and may define a third strut warp fiber layer 478.

Each of the strut warp fiber tows 458 includes the first-connection portion 460. For example, the first strut warp fiber tow 468 includes a first first-connection portion 460a, the second strut warp fiber tow 470 includes a second first-connection portion 460b, and the third strut warp fiber tow 472 includes a third first-connection portion 460c. In addition, each of the strut warp fiber tows 458 includes the strut portion 464. For example, the first strut warp fiber tow 468 includes a first strut portion 464a, the second strut warp fiber tow 470 includes a second strut portion 464b, and the third strut warp fiber tow 472 includes a third strut portion 464c. In forming the strut preform 306, the first-connection portion 460 of each of the strut warp fiber tows 458 is integrally woven with the inner hub preform 312. For example, the first first-connection portion 460a of the first strut warp fiber tow 468 is integrally woven with the first warp fiber layer 408 to extend in a first direction 407 with respect to the first assembly reference layout direction 428 (FIG. 20), and to extend in the third direction 426 with respect to the first assembly reference layout direction 428 (FIG. 20). Similarly, the second first-connection portion 460b of the second strut warp fiber tow 470 is integrally woven with the second warp fiber layer 410 to extend in the first direction 407 and to extend in the third direction 426 with respect to the first assembly reference layout direction 428. Additionally, the third first-connection portion 460c of the third strut warp fiber tow 472 is integrally woven with the third warp fiber layer 412 to extend in the first direction 407 and to extend in the third direction 426 with respect to the first assembly reference layout direction 428. Each strut portion 464 of the strut warp fiber tows 458 is, as shown in FIG. 20, arranged during the current portion of the process for forming the strut preform 306 to extend in the first direction 406 (e.g., in the lengthwise direction) with respect to the first assembly reference layout direction 428. As will be described in more detail below, in a later step in the process of forming the strut preforms 306, each of the strut portions 464 is arranged to extend in the third direction 426 with respect to the first assembly reference layout direction 428.

FIG. 22 is an enlarged view of the second-connection portion 462 and the outer shell preform 308, taken at detail view 486 of FIG. 20, according to an aspect of the present disclosure. As shown in FIG. 22, the plurality of strut warp fiber tows 458 includes the first strut warp fiber tow 468, the second strut warp fiber tow 470, and the third strut warp fiber tow 472. Similar to the FIG. 21 aspect, while the FIG. 22 aspect depicts three strut warp fiber tows 458, greater than three strut warp fiber tows 458 or fewer than three strut warp fiber tows 458 may be included instead. In addition, while FIG. 22 depicts, for example, one first strut warp fiber tow 468, a plurality of first strut warp fiber tows 468 may be included and may be arranged in a row extending in a direction into and out of the planar view of FIG. 22. Thus, the plurality of first strut warp fiber tows 468 may define a first strut warp fiber layer 488 of the first strut warp fiber tows 468 similar to the first warp fiber layer 383 of the warp fiber tows 378 of the outer shell preform 308. Similarly, a plurality of the second strut warp fiber tows 470 may be included and arranged in a row extending in the direction into and out of the planar view of FIG. 22, and may define a second strut warp fiber layer 490. In addition, a plurality of the third strut warp fiber tows 472 may be included and arranged in a row extending in the direction into and out of the planar view of FIG. 22, and may define a third strut warp fiber layer 492.

Each of the strut warp fiber tows 458 includes the second-connection portion 462. For example, the first strut warp fiber tow 468 includes a first second-connection portion 462a, the second strut warp fiber tow 470 includes a second second-connection portion 462b, and the third strut warp fiber tow 472 includes a third second-connection portion 462c. In addition, each of the strut warp fiber tows 458 includes the strut portion 464 as described above for FIG. 21. For example, the first strut warp fiber tow 468 includes the first strut portion 464a, the second strut warp fiber tow 470 includes the second strut portion 464b, and the third strut warp fiber tow 472 includes the third strut portion 464c. In forming the strut preform 306, the second-connection portion 462 of each of the strut warp fiber tows 458 is integrally woven with the outer shell preform 308. For example, the first second-connection portion 462a of the first strut warp fiber tow 468 is integrally woven with the first warp fiber layer 382 to extend in a second direction 381 opposite to the first direction 407 (FIG. 21), and to extend in the third direction 400 with respect to the first assembly reference layout direction 428 (FIG. 20). Similarly, the second second-connection portion 462b of the second strut warp fiber tow 470 is integrally woven with the second warp fiber layer 384 to extend in the second direction 381 and to extend in the third direction 400 with respect to the first assembly reference layout direction 428. Additionally, the third second-connection portion 462c of the third strut warp fiber tow 472 is integrally woven with the third warp fiber layer 386 to extend in the second direction 381 and to extend in the third direction 400 with respect to the first assembly reference layout direction 428. Each strut portion 464 of the strut warp fiber tows 458 is, as shown in FIG. 20, arranged during the current portion of the process for forming the strut preform 306 to extend in the first direction 380 (e.g., in the lengthwise direction, which is the same as the first direction 406 of FIG. 21) with respect to the first assembly reference layout direction 428.

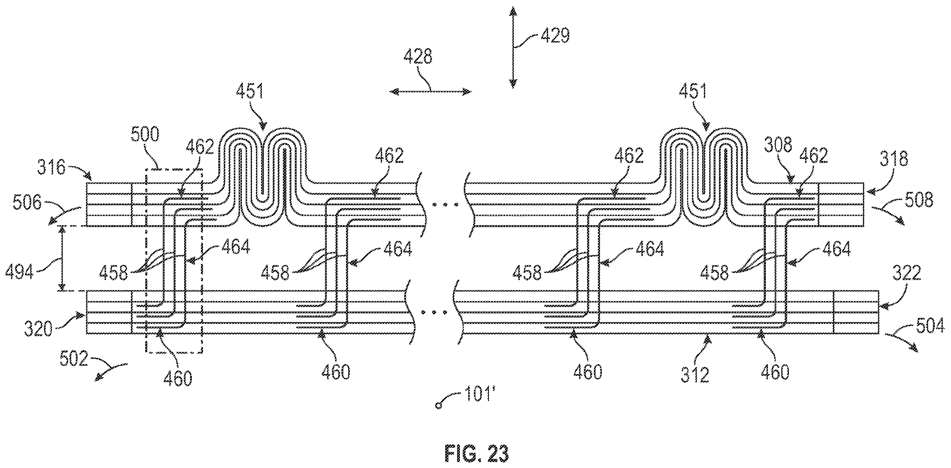

FIG. 23 is a side view of the assembly layout of the outer shell preform 308, the inner hub preform 312, and the strut warp fiber tows 458 of FIG. 20 during another process of forming the preform assembly 300 (FIG. 7), according to an aspect of the present disclosure. In FIG. 23, after the strut warp fiber tows 458 have been integrally woven with the inner hub preform 312 and with the outer shell preform 308 as described above with regard to FIG. 20, the outer shell preform 308 is shifted with respect to the inner hub preform 312. More specifically, the outer shell preform 308 is shifted in the first assembly reference layout direction 428 and in a second assembly reference layout direction 429 orthogonal to the first assembly reference layout direction 428. The shifting increases a distance 494 in the second assembly reference layout direction 429 between the outer shell preform 308 and the inner hub preform 312. The shifting also shifts the strut portion 464 of each of the strut warp fiber tows 458 from extending along the first assembly reference layout direction 428 to extending along the second assembly reference layout direction 429.

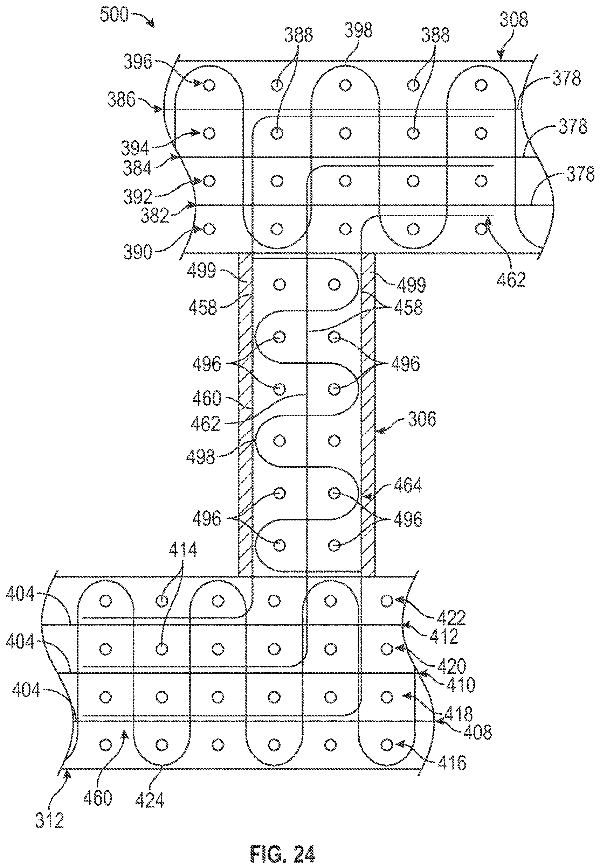

FIG. 24 is an enlarged view of a portion of the assembly layout of FIG. 23, taken at detail view 500 of FIG. 23, according to an aspect of the present disclosure. In FIG. 23, in continuing to form each of the strut preforms 306, following the integral weaving of the strut warp fiber tows 458, strut weft fiber tows 496, and strut interlocking fiber tows 498 are woven with the strut portion 464 of each of the strut warp fiber tows 458. In a manner similar to that described above for FIG. 17 and FIG. 18, the strut weft fiber tows 496 are woven in the second direction into and out of the page of FIG. 24. The weaving of the strut weft fiber tows 496 and the strut interlocking fiber tows 498 with the strut warp fiber tows 458 defines the strut preform 306. In addition, additional preform layers 499 may be added to the strut portion 464 to form an airfoil shape of the strut preform 306.

Referring back to FIG. 23, the first inner hub connecting end 320 of the inner hub preform 312 is extended in a generally circumferential direction 502 with respect to the vane structure centerline axis 101' and the second inner hub connecting end 322 of the inner hub preform 312 is extended in a generally circumferential direction 504 with respect to the vane structure centerline axis 101', and the first inner hub connecting end 320 and the second inner hub connecting end 322 are connected together as described above with regard to FIG. 13 to FIG. 15 to form the inner hub hoop preform 314. In addition, the first outer shell connecting end 316 of the outer shell preform 308 is extended in a generally circumferential direction 506 with respect to the vane structure centerline axis 101' and the second outer shell connecting end 318 of the outer shell preform 308 is extended in a generally circumferential direction 508 with respect to the vane structure centerline axis 101', and the first outer shell connecting end 316 and the second outer shell connecting end 318 are connected together as described above with regard to FIG. 10 to FIG. 12 to form the outer shell hoop preform 310. In extending the outer shell preform 308, the undulations 451 are also extended apart.

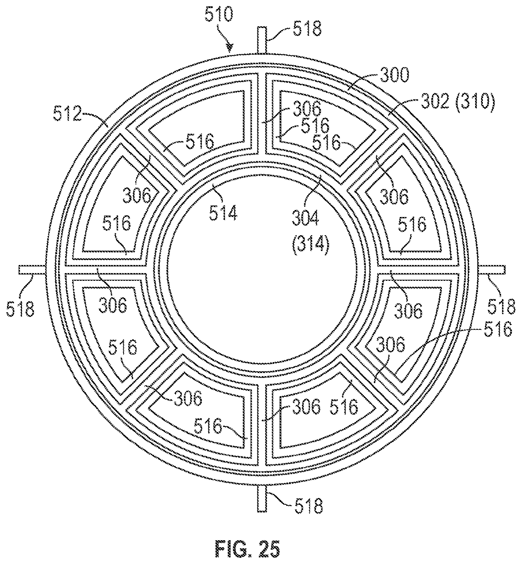

FIG. 25 is a schematic view of a mold tooling structure 510 that may be utilized in manufacturing the vane structure 161 of FIG. 4, according to an aspect of the present disclosure. The mold tooling structure 510 includes an outer shell mold portion 512 for forming the outer shell 165 (FIG. 4), an inner hub mold portion 514 for forming the inner hub 167 (FIG. 4), and a plurality of strut mold portions 516 for forming the guide vanes (struts) 158. The preform assembly 300 (FIG. 7) is formed and assembled as described above with regard to any of FIGS. 7 to 24, and the preform assembly 300 may be assembled utilizing the mold tooling structure 510. For example, the outer shell hoop preform 310 may be assembled onto the outer shell mold portion 512, and the inner hub hoop preform 314 may be assembled onto the inner hub mold portion 514, and each of the strut preforms 306 may be assembled via the strut mold portions 516.

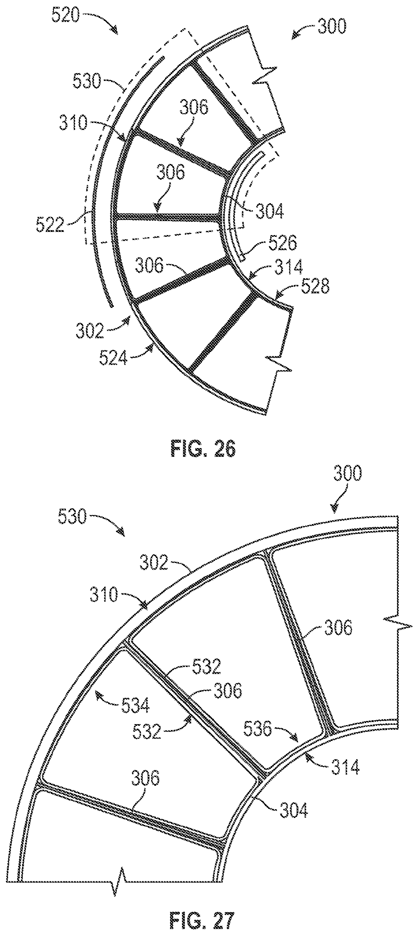

FIG. 26 is an enlarged view of a portion of the preform assembly 300 of FIG. 7, taken at detail view 520 of FIG. 7, according to an aspect of the present disclosure. In FIG. 26, one or more additional preform layers 522 may be added to an exterior side 524 of the outer shell hoop preform 310. The one or more additional preform layers 522 may be added to increase a thickness of the outer shell hoop preform 310. The additional preform layers 522 may be assembled to the preform assembly 300 either before, or after, being installed onto the mold tooling structure 510. The additional preform layers 522 may be either three-dimensional woven fabric preforms, or may be two-dimensional preforms or layers. Further, one or more additional preform layers 526 may be added to the inner hub hoop preform 314 by being layered onto an interior side 528 of the inner hub hoop preform 314. The one or more additional preform layers 526 may be added to increase a thickness of the inner hub hoop preform 314. The additional preform layers 526 may also be added to the inner hub hoop preform 314 either before, or after the inner hub hoop preform 314 is installed onto the mold tooling structure 510. The additional preform layers 526 may also be either three-dimensional woven fabric preforms, or two-dimensional preforms or layers.

FIG. 27 is an enlarged view of a portion of the preform assembly 300 of FIG. 26, taken at detail view 530 of FIG. 26, according to an aspect of the present disclosure. In FIG. 27, one or more additional preform layers 532 may be added to each of the strut preforms 306, in-between respective ones of the strut preforms 306 along an interior side 534 of the outer shell hoop preform 310, and along an exterior side 536 of the inner hub hoop preform 314. The additional preform layers 532 may be in the form of three-dimensional woven fabric layers, two-dimensional woven fabric layers, or a woven or a braided sock that may be added to thicken the bifurcated strut preforms 306 and also to build and to form the airfoil structure for each of the guide vanes 158 (FIG. 4).

Referring back to FIG. 25, the mold tooling structure 510 also includes one or more injectors 518 through which a matrix material (as described above) may then be injected into the mold tooling structure 510 to generate an impregnated preform assembly within the mold tooling structure 510. A curing process may then be applied to the impregnated preform assembly within the mold tooling structure 510. For example, the mold tooling structure 510 may include the ability to apply pressure and heat to the impregnated preform assembly to apply the curing process, or the mold tooling structure 510 may be provided to an autoclave to institute a curing process. The cured composite component can then be removed from the mold tooling structure 510 for additional machining or other processing to complete the manufacturing process of the composite component.

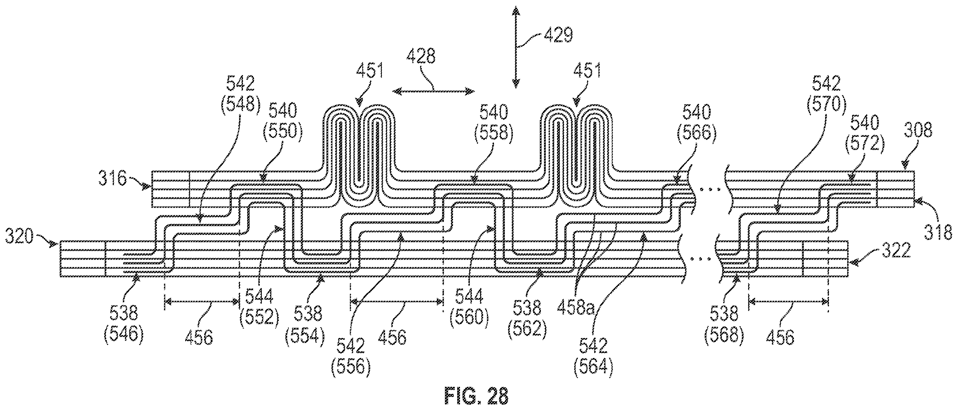

FIG. 28 is a side view of an alternate assembly layout of the outer shell preform 308, the inner hub preform 312, and alternate strut preform fiber tows 458a during a process of forming the preform assembly 300 (FIG. 7), according to an aspect of the present disclosure. Elements in FIG. 28 that are the same as those in FIG. 20 include the same reference numerals and the description of those elements provided above for FIG. 20 is also applicable to FIG. 28. In FIG. 20, the plurality of the strut warp fiber tows 458 are shown to be integrally woven with the inner hub preform 312 and with the outer shell preform 308 for individual ones of the strut preforms 306. In contrast, in the alternate arrangement of FIG. 28, continuous strut warp fiber tows 458a are integrally woven with inner hub preform 312 and with the outer shell preform 308 to form the plurality of strut preforms 306. More specifically, each of the continuous strut warp fiber tows 458a is alternately woven with the outer shell preform 308 and with the inner hub preform 312 to define a plurality of first-connection portions 538, a plurality of second-connection portions 540, and a plurality of strut portions 542 for forming the plurality of strut preforms 306 (FIG. 7). In addition, each of the continuous strut warp fiber tows 458a includes a cut portion 544 that extends between the outer shell preform 308 and the inner hub preform 312. As will be described below, each cut portion 544 is severed (or trimmed) in order to shift the outer shell preform 308 in the first assembly reference layout direction 428 and in the second assembly reference layout direction 429 in a similar manner to that described above for FIG. 23.

With the continuous strut warp fiber tows 458a being alternately woven with the inner hub preform 312 and with the outer shell preform 308, the continuous strut warp fiber tows 458a define, in order, a first first-connection portion 546, a first strut portion 548, a first second-connection portion 550, a first cut portion 552, a second first-connection portion 554, a second strut portion 556, a second second-connection portion 558, a second cut portion 560, a third first-connection portion 562, a third strut portion 564, and a third second-connection portion 566. In the case when the preform assembly 300 includes eight strut preforms 306 as shown in FIG. 7, the continuous strut warp fiber tows 458a continue to be woven alternately with the inner hub preform 312 and the outer shell preform 308 until the continuous strut warp fiber tows 458a define an eighth first-connection portion 568, an eighth strut portion 570, and an eighth second-connection portion 572. After the continuous strut warp fiber tows 458a are integrally woven with the inner hub preform 312 and with the outer shell preform 308, each of the cut portions 544 may be severed. That is, for example, the first cut portion 552 may be severed, and the second cut portion 560 may be severed. Once each cut portion 544 has been severed, then the configuration of FIG. 28 is similar to the configuration of FIG. 20, and the outer shell preform 308 may be shifted in the same manner as described above with regard to FIG. 23. In addition, as described above for FIG. 24, the strut weft fiber tows 496 and the strut interlocking fiber tows 498 may be woven in each strut portion 542. The further processing is then the same as described above with regard to FIG. 25 to FIG. 27 to obtain the composite component.

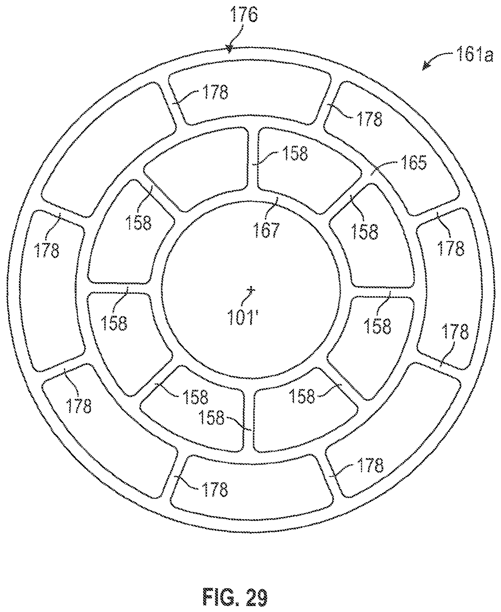

FIG. 29 is a schematic, forward aft-looking view of an alternate vane structure 161a to the vane structure 161 shown in FIG. 4, according to an aspect of the present disclosure. The alternate vane structure 161a includes elements that are the same as the vane structure 161 of FIG. 4, and those elements include the same reference numbers as in FIG. 4 and the description provided above for those elements is also applicable to FIG. 29. In FIG. 29, however, the alternate vane structure 161a includes a second outer shell 176 and a plurality of outer struts 178 that are arranged between the outer shell 165 and the second outer shell 176. While FIG. 29 depicts eight outer struts 178, greater than eight or fewer than eight outer struts 178 may be provided instead. In addition, while FIG. 29 depicts eight struts 158, greater than eight or fewer than eight struts 158 may be provided instead.

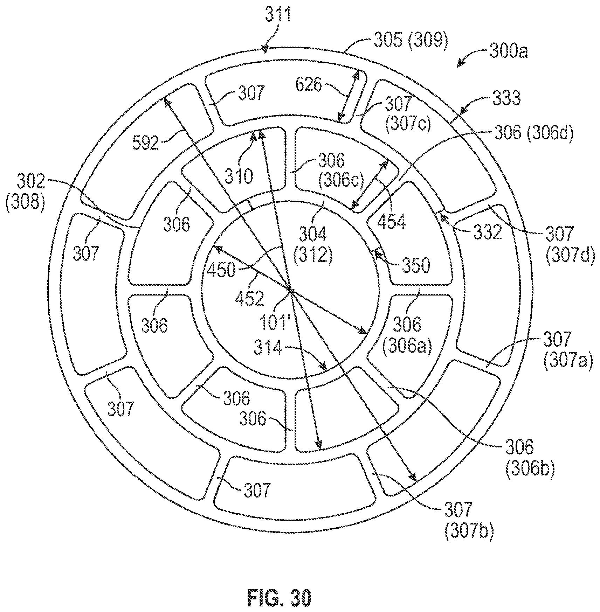

FIG. 30 is a schematic, aft-looking layout of an alternate preform assembly 300a of the preform assembly 300 of FIG. 7 used in manufacturing the alternate vane structure 161a of FIG. 29, according to an aspect of the present disclosure. In FIG. 30, elements that are the same as those of FIG. 7 include the same reference numerals and the description of those elements provided above with regard to FIG. 7 is also applicable to FIG. 30. In FIG. 30, the alternate preform assembly 300a includes a second outer shell preform 305 that is woven as a three-dimensional fabric second outer shell preform 309, and a plurality of outer strut preforms 307 that extend between the outer shell preform 308 and the second outer shell preform 309. As will be described below, the second outer shell preform 309 is arranged to form a second outer shell hoop preform 311 via a second outer shell connection 333 in a manner similar to forming the outer shell hoop preform 310 via the outer shell connection 332.

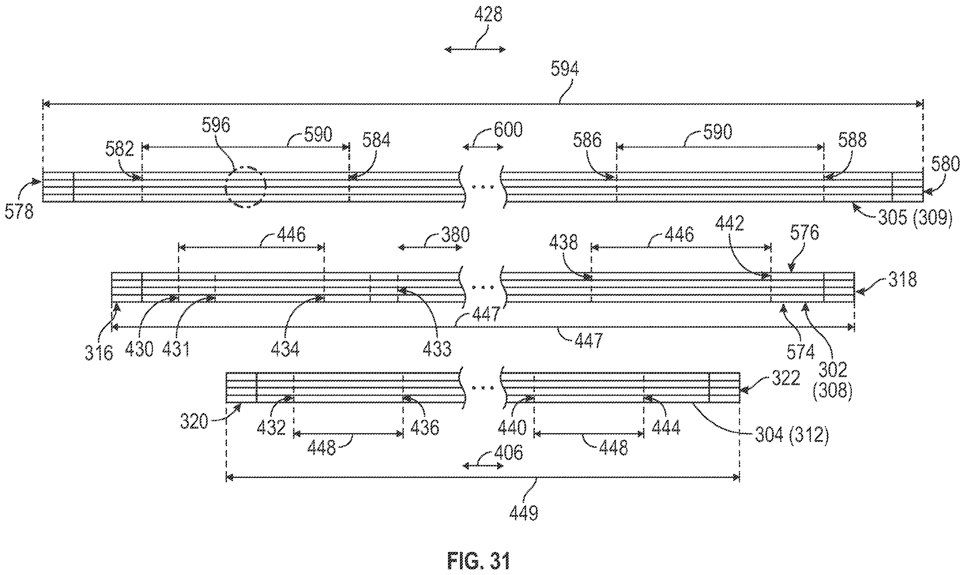

FIG. 31 is a side view of an assembly layout of the outer shell preform 308, the inner hub preform 312, and the second outer shell preform 309 during a process of forming the preform assembly 300 (FIG. 7), according to an aspect of the present disclosure. FIG. 31 is similar to FIG. 19 and elements in FIG. 31 that are the same as those in FIG. 19 include the same reference numerals, and the description provided above for those elements with regard to FIG. 19 is also applicable to FIG. 31. In FIG. 31, in the same manner described above for FIG. 19, the outer shell preform 308 is arranged to extend along the first assembly reference layout direction 428 (e.g., a lengthwise direction or a longitudinal direction), and the inner hub preform 312 is also arranged to extend along the first assembly reference layout direction 428. In addition, the second outer shell preform 309 is arranged to extend along the first assembly reference layout direction 428. The inner hub preform 312 is also arranged adjacent to a first side 574 of the outer shell preform 308 so that, as will be described below, the plurality of strut preforms 306 can be integrally woven with the inner hub preform 312 and with the outer shell preform 308. The second outer shell preform 309 is also arranged adjacent to a second side 576 of the outer shell preform 308 so that, as will be described below, the plurality of outer strut preforms 307 (FIG. 30) can be integrally woven with the outer shell preform 308 and with the second outer shell preform 309.

The second outer shell preform 309 has a length 594 and includes a first second outer shell connecting end 578 and a second second outer shell connecting end 580. The first second outer shell connecting end 578 may be the same as the first outer shell connecting end 316 (FIG. 10), and the second second outer shell connecting end 580 may be the same as the second outer shell connecting end 318 (FIG. 11). Thus, in forming the second outer shell hoop preform 311 (FIG. 30), the first second outer shell connecting end 578 and the second second outer shell connecting end 580 are connected together to form the second outer shell connection 333 (FIG. 30). The second outer shell connection 333 may be the same as the outer shell connection 332 (FIG. 12).

In FIG. 31, reference lines are provided as a reference location of where an outer strut preform 307 (FIG. 30) is connected with the second outer shell preform 309. For example, a first reference line 582 indicates a reference location where a first outer strut preform 307a (FIG. 30) is connected with the second outer shell preform 309 and reference line 431 indicates a location where the first outer strut preform 307a is connected with the outer shell preform 308. In addition, a second reference line 584 indicates a location where a second outer strut preform 307b is connected with the second outer shell preform 309, while a reference line 433 indicates a location where the second outer strut preform 307b is connected with the outer shell preform 308. Similarly, a third reference line 586 indicates a location where a third outer strut preform 307c (FIG. 30) is connected with the second outer shell preform 309 and a fourth reference line 588 indicates a location where a fourth outer strut preform 307d (FIG. 30) is connected with the second outer shell preform 309. The first reference line 582 and the second reference line 584 are spaced apart from one another by a distance 590, which corresponds to a circumferential spacing between the first outer strut preform 307a and the second outer strut preform 307b on the second outer shell preform 309. Similarly, the third reference line 586 and the fourth reference line 588 are spaced apart from one another by the distance 590, which corresponds to a circumferential spacing between the third outer strut preform 307c and the fourth outer strut preform 307d on the second outer shell preform 309. As seen in FIG. 30, a diameter 592 of the second outer shell hoop preform 311 is greater than the diameter 450 of the outer shell hoop preform 310. Thus, due to the larger diameter 592 of the second outer shell hoop preform 311 as compared to the diameter 450 of the outer shell hoop preform 310, when the outer strut preforms 307 are equally spaced about the second outer shell preform 309 and equally spaced about the outer shell preform 308, the distance 590 (FIG. 31) is greater than the distance 446 (FIG. 31).

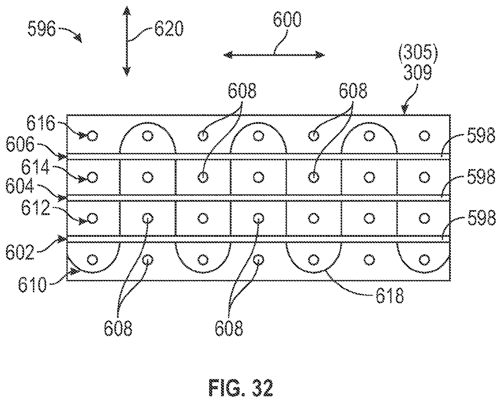

FIG. 32 is an enlarged view of a portion of the second outer shell preform 309, taken at detail view 596 of FIG. 31, according to an aspect of the present disclosure. As shown in FIG. 32, and similar to the outer shell preform 308 shown in FIG. 17, the second outer shell preform 305 is woven as the three-dimensional fabric second outer shell preform 309 and includes a plurality of warp fiber tows 598 that extend in a first direction 600 (e.g., in a lengthwise direction), and that are arranged in a plurality warp fiber layers, including a first warp fiber layer 602, a second warp fiber layer 604, and a third warp fiber layer 606. The plurality of warp fiber tows 598 may be similar to the warp fiber tows 210 of FIG. 2A and FIG. 2B, and the plurality of warp fiber layers (i.e., the first warp fiber layer 602, the second warp fiber layer 604, and the third warp fiber layer 606) may be similar to the warp fiber layers 212 of FIG. 2A and FIG. 2B. The second outer shell preform 309 also includes a plurality of weft fiber tows 608 that extend in a second direction (not labeled) orthogonal to the first direction 600 (i.e., a direction into and out of the drawing page), and that are arranged in a plurality of weft fiber layers, including a first weft fiber layer 610, a second weft fiber layer 612, a third weft fiber layer 614, and a fourth weft fiber layer 616. The weft fiber tows 608 may be similar to the weft fiber tows 220 of FIG. 2A and FIG. 2B, and the plurality of weft fiber layers (i.e., the first weft fiber layer 610, the second weft fiber layer 612, the third weft fiber layer 614, and the fourth weft fiber layer 616) may be similar to the weft fiber layers 222 of FIG. 2A and FIG. 2B. The second outer shell preform 309 also includes a plurality of interlocking fiber tows 618, that extend in a third direction 620 (e.g., a thickness direction), and that may be similar to the interlocking fiber tows 230 of FIG. 2A and FIG. 2B.

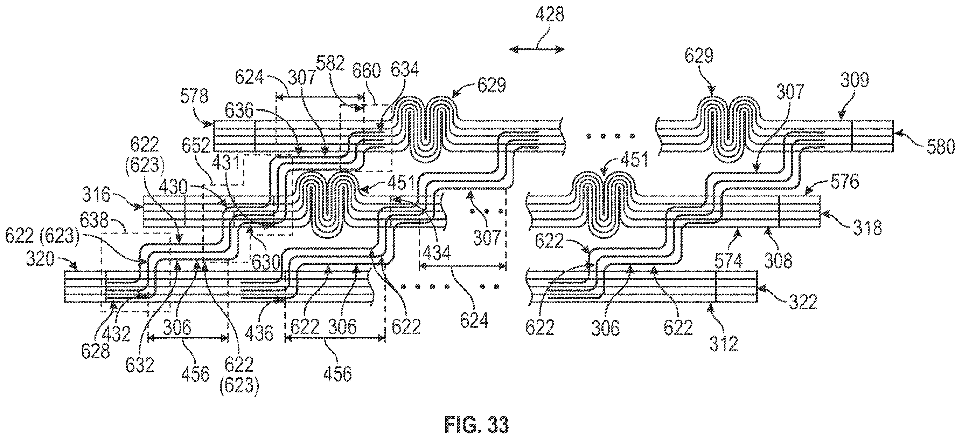

FIG. 33 depicts an example of a process to integrally weave the strut preforms 306 (FIG. 30) with the outer shell preform 308 and the inner hub preform 312, and integrally weave the outer strut preforms 307 (FIG. 30) with the outer shell preform 308 and the second outer shell preform 309. In FIG. 33, elements that are the same as those of FIG. 20 include the same reference numerals and the description of those elements provided above for FIG. 20 is also applicable to FIG. 33. In FIG. 33, the inner hub preform 312 is arranged adjacent to the first side 574 of the outer shell preform 308 with respect to the first assembly reference layout direction 428 for connecting each of the plurality of strut preforms 306 to the inner hub preform 312 and to the outer shell preform 308. In addition, the second outer shell preform 309 is arranged adjacent to the second side 576 of the outer shell preform 308 with respect to the first assembly reference layout direction 428 for connecting each of the plurality of the outer strut preforms 307 to the outer shell preform 308 and to the second outer shell preform 309. In the same manner as described above with regard to FIG. 20, based on the length 454 (FIG. 7) of the strut preforms 306, the outer shell preform 308 and the inner hub preform 312 are arranged so that the first reference line 430 and the second reference line 432 are offset from each other in the first assembly reference layout direction 428 by the offset distance 456. As was described above with regard to FIG. 20, due to the difference in the distance 446 as compared with the distance 448 (the distance 446 being greater than the distance 448), and due to the difference of the overall length 447 (FIG. 19) of the outer shell preform 308 as compared with the overall length 449 (FIG. 19) of the inner hub preform 312 (the overall length 447 being greater than the overall length 449), to obtain the offset distance 456 for integrally weaving at least some of the strut preforms 306, the undulations 451 may be provided for in the outer shell preform 308. In the same manner described above for FIG. 20, the offset distance 456 provides for integrally weaving a plurality of strut warp fiber tows 622 with the inner hub preform 312 and with the outer shell preform 308 to form the strut preforms 306.

Similarly, on a length 626 (FIG. 30) of the outer strut preforms 307, the second outer shell preform 309 and the outer shell preform 308 are arranged so that the reference line 431 and first reference line 582 are offset from each other in the first assembly reference layout direction 428 by an offset distance 624. Due to the difference in the distance 446 (FIG. 31) as compared with the distance 590 (the distance 590 being greater than the distance 446), and due to the difference of the overall length 447 (FIG. 31) of the outer shell preform 308 as compared with the overall length 594 (FIG. 31) of the second outer shell preform 309 (the overall length 594 being greater than the overall length 447), to obtain the distance 590 for integrally weaving at least some of the strut preforms 306, undulations 629 may be provided in the second outer shell preform 309. In the same manner described above for FIG. 20, the offset distance 624 provides for integrally weaving the plurality of strut warp fiber tows 622 with the outer shell preform 308 and with the second outer shell preform 309 to form the outer strut preforms 307.

Each of the strut warp fiber tows 622 may be, for example, warp fiber tows similar to the warp fiber tows 210 of the FIG. 2A configuration. As will be described in more detail below, each of the plurality of strut warp fiber tows 622 is a continuing strut warp fiber tow 623 that is integrally woven with the inner hub preform 312, the outer shell preform 308, and the second outer shell preform 309 to define both the strut preform 306 and the outer strut preform 307. More specifically, each of the continuing strut warp fiber tows 623 includes a first-connection portion 628 that is integrally woven with the inner hub preform 312, a second-connection portion 630 that is integrally woven with the outer shell preform 308, a first strut portion 632 defined between the first-connection portion 628 and the second-connection portion 630, a third-connection portion 634 that is integrally woven with the second outer shell preform 309, and a second strut portion 636 defined between the second-connection portion 630 and the third-connection portion 634. The first strut portion 632 is woven to extend along the first assembly reference layout direction 428, and the second strut portion 636 is woven to extend along the first assembly reference layout direction 428.

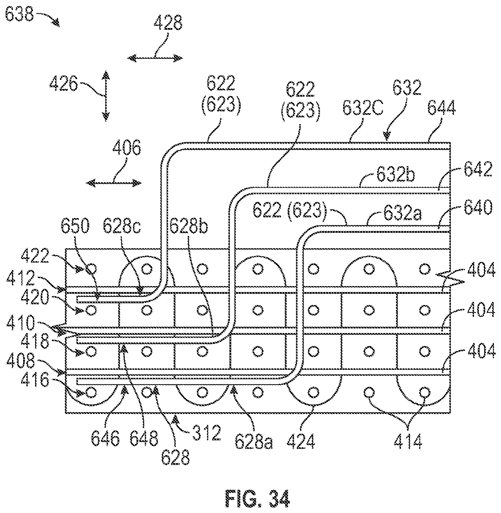

FIG. 34 is an enlarged view of the first-connection portion 628 and the inner hub preform 312, taken at detail view 638 of FIG. 33, according to an aspect of the present disclosure. As shown in FIG. 34, the plurality of continuing strut warp fiber tows 623 may include a first continuing strut warp fiber tow 640, a second continuing strut warp fiber tow 642, and a third continuing strut warp fiber tow 644. While FIG. 34 depicts three continuing strut warp fiber tows 623, greater than three continuing strut warp fiber tows 623 or fewer than three continuing strut warp fiber tows 623 may be included instead. In addition, while FIG. 34 depicts, for example, one first continuing strut warp fiber tow 640, a plurality of first continuing strut warp fiber tows 640 may be included and may be arranged in a row extending in a direction into and out of the planar view of FIG. 33. Thus, the plurality of first continuing strut warp fiber tows 640 may define a first strut warp fiber layer 646 of the first continuing strut warp fiber tows 640 similar to the first warp fiber layer 408 of the warp fiber tows 404 of the inner hub preform 312. Similarly, a plurality of the second continuing strut warp fiber tows 642 may be included and arranged in a row extending in the direction into and out of the planar view of FIG. 34, and may define a second strut warp fiber layer 648. In addition, a plurality of the third continuing strut warp fiber tows 644 may be included and arranged in a row extending in the direction into and out of the planar view of FIG. 34, and may define a third strut warp fiber layer 650.

Each of the continuing strut warp fiber tows 623 includes the first-connection portion 628. For example, the first continuous strut warp fiber tow 640 includes a first first-connection portion 628a, the second continuous strut warp fiber tow 642 includes a second first-connection portion 628b, and the third continuous strut warp fiber tow 644 includes a third first-connection portion 628c. In addition, each of the continuing strut warp fiber tows 623 includes the first strut portion 632. For example, the first continuous strut warp fiber tow 640 includes a first first strut portion 632a, the second continuous strut warp fiber tow 642 includes a second first strut portion 632b, and the third continuous strut warp fiber tow 644 includes a third first strut portion 632c. In forming the strut preform 306, the first-connection portion 628 of each of the continuing strut warp fiber tows 623 is integrally woven with the inner hub preform 312. For example, the first first-connection portion 628a of the first continuous strut warp fiber tow 640 is integrally woven with the first warp fiber layer 408 to extend in the first direction 406 and to extend in the third direction 426 with respect to the first assembly reference layout direction 428. Similarly, the second first-connection portion 628b of the second continuous strut warp fiber tow 642 is integrally woven with the second warp fiber layer 410 to extend in the first direction 406 and to extend in the third direction 426 with respect to the first assembly reference layout direction 428. Additionally, the third first-connection portion 628c of the third continuous strut warp fiber tow 644 is integrally woven with the third warp fiber layer 412 to extend in the first direction 406 and to extend in the third direction 426 with respect to the first assembly reference layout direction 428. Each first strut portion 632 of the continuing strut warp fiber tows 623 is, as shown in FIG. 33, arranged during the current portion of the process for forming the strut preform 306 to extend in the first direction 406 (e.g., in the lengthwise direction) with respect to the first assembly reference layout direction 428. As will be described in more detail below, in a later step in the process of forming the strut preforms 306, each of the first strut portions 632 is arranged to extend in the third direction 426 with respect to the first assembly reference layout direction 428.

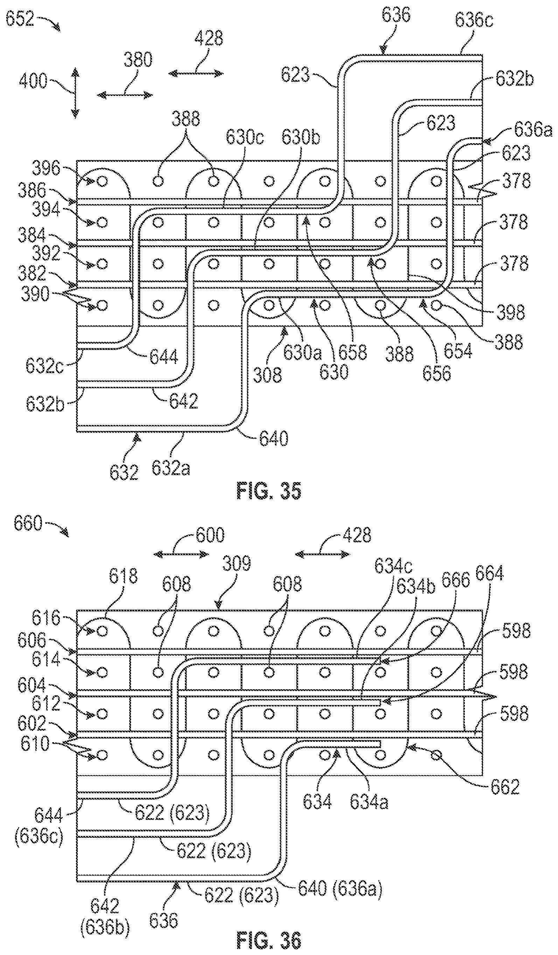

FIG. 35 is an enlarged view of the second-connection portion 630 and the outer shell preform 308, taken at detail view 652 of FIG. 33, according to an aspect of the present disclosure. As shown in FIG. 35, the plurality of continuing strut warp fiber tows 623 includes the first continuous strut warp fiber tow 640, the second continuous strut warp fiber tow 642, and the third continuous strut warp fiber tow 644. Similar to the aspect of FIG. 34, while FIG. 35 depicts the three continuing strut warp fiber tows 623, greater than three continuing strut warp fiber tows 623 or fewer than three continuing strut warp fiber tows 623 may be included instead. In addition, while FIG. 35 depicts, for example, the one first continuous strut warp fiber tow 640, a plurality of the first continuous strut warp fiber tows 640 may be included and may be arranged within the outer shell preform 308 in a row extending in a direction into and out of the planar view of FIG. 35. Thus, the plurality of first continuous strut warp fiber tows 640 may define a first strut warp fiber layer 654 of the first continuous strut warp fiber tows 640 similar to the first warp fiber layer 383 of the warp fiber tows 378 of the outer shell preform 308. Similarly, a plurality of the second continuous strut warp fiber tows 642 may be included and arranged in a row extending in the direction into and out of the planar view of FIG. 35, and may define a second strut warp fiber layer 656. In addition, a plurality of the third continuous strut warp fiber tows 644 may be included and arranged in a row extending in the direction into and out of the planar view of FIG. 35, and may define a third strut warp fiber layer 658.

Each of the continuing strut warp fiber tows 623 includes the second-connection portion 630. For example, the first continuous strut warp fiber tow 640 includes a first second-connection portion 630a, the second continuous strut warp fiber tow 642 includes a second second-connection portion 630b, and the third continuous strut warp fiber tow 644 includes a third second-connection portion 630c. In addition, each of the continuing strut warp fiber tows 623 includes the second strut portion 636. For example, the first continuous strut warp fiber tow 640 continues beyond the second-connection portion 630 and includes a first second strut portion 636a, the second continuous strut warp fiber tow 642 continues beyond the second-connection portion 630 and includes the second second strut portion 636b, and the third continuous strut warp fiber tow 644 continues beyond the second-connection portion 630 and includes a third second strut portion 636c.

In forming the strut preform 306 and the outer strut preform 307, the second-connection portion 630 of each of the continuing strut warp fiber tows 623 is integrally woven with the outer shell preform 308. For example, the first second-connection portion 630a of the first continuous strut warp fiber tow 640 is integrally woven with the first warp fiber layer 382 to extend in the first direction 380 and to extend in the third direction 400 with respect to the first assembly reference layout direction 428. Similarly, the second second-connection portion 630b of the second continuous strut warp fiber tow 642 is integrally woven with the second warp fiber layer 384 to extend in the first direction 380 and to extend in the third direction 400 with respect to the first assembly reference layout direction 428. Additionally, the third second-connection portion 630c of the third continuous strut warp fiber tow 644 is integrally woven with the third warp fiber layer 386 to extend in the first direction 380 and to extend in the third direction 400 with respect to the first assembly reference layout direction 428. Each second strut portion 636 of the continuing strut warp fiber tows 623 is, as shown in FIG. 33, arranged during the current portion of the process for forming the outer strut preform 307 to extend in the first direction 380 (e.g., in the lengthwise direction, which is the same as the first direction 406 of FIG. 21) with respect to the first assembly reference layout direction 428.

FIG. 36 is an enlarged view of the third-connection portion 634 and the second outer shell preform 309, taken at detail view 660 of FIG. 33, according to an aspect of the present disclosure. As shown in FIG. 36, the plurality of continuing strut warp fiber tows 623 includes the first continuous strut warp fiber tow 640, the second continuous strut warp fiber tow 642, and the third continuous strut warp fiber tow 644. Similar to the aspect of FIG. 35, while FIG. 36 depicts the three continuing strut warp fiber tows 623, greater than three continuing strut warp fiber tows 623 or fewer than three continuing strut warp fiber tows 623 may be included instead. In addition, while FIG. 36 depicts, for example, the one first continuous strut warp fiber tow 640, a plurality of the first continuous strut warp fiber tows 640 may be included and may be arranged within the second outer shell preform 309 in a row extending in a direction into and out of the planar view of FIG. 36. Thus, the plurality of first continuous strut warp fiber tows 640 may define a first strut warp fiber layer 662 of the first continuous strut warp fiber tows 640 similar to the first warp fiber layer 602 of the warp fiber tows 598 (FIG. 32) of the second outer shell preform 309. Similarly, a plurality of the second continuous strut warp fiber tows 642 may be included and arranged in a row extending in the direction into and out of the planar view of FIG. 36, and may define a second strut warp fiber layer 664. In addition, a plurality of the third continuous strut warp fiber tows 644 may be included and arranged in a row extending in the direction into and out of the planar view of FIG. 36, and may define a third strut warp fiber layer 666.

Each of the continuing strut warp fiber tows 623 includes the third-connection portion 634 that is a continuing portion of the continuing strut warp fiber tows 623 beyond the second strut portion 636. For example, the first continuous strut warp fiber tow 640 includes a first third-connection portion 634a, the second continuous strut warp fiber tow 642 includes a second third-connection portion 634b, and the third continuous strut warp fiber tow 644 includes a third third-connection portion 634c. Each of the continuing strut warp fiber tows 623 is integrally woven with the second outer shell preform 309. For example, the first third-connection portion 634a of the first continuous strut warp fiber tow 640 is integrally woven with the first warp fiber layer 602 to extend in the first direction 600 with respect to the first assembly reference layout direction 428. Similarly, the second third-connection portion 634b of the second continuous strut warp fiber tow 642 is integrally woven with the second warp fiber layer 604 to extend in the first direction 600 with respect to the first assembly reference layout direction 428. Additionally, the third third-connection portion 634c of the third continuous strut warp fiber tow 644 is integrally woven with the third warp fiber layer 606 to extend in the first direction 600 with respect to the first assembly reference layout direction 428.

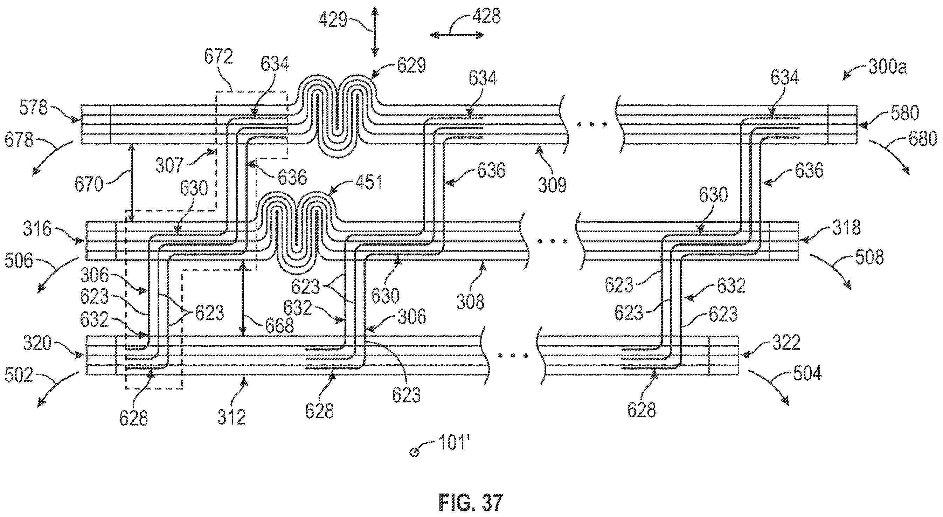

FIG. 37 is a side view of the assembly layout of the outer shell preform 308, the inner hub preform 312, the second outer shell preform 309, and the continuing strut warp fiber tows 623 of FIG. 33 during another process of forming the alternate preform assembly 300a, according to an aspect of the present disclosure. In FIG. 37, similar to the aspect of FIG. 23, after the continuing strut warp fiber tows 623 have been integrally woven with the inner hub preform 312, with the outer shell preform 308, and with the second outer shell preform 309 as described above with regard to FIG. 31 to FIG. 36, the outer shell preform 308 is shifted with respect to the inner hub preform 312, and the second outer shell preform 309 is also shifted with respect to the outer shell preform 308 and with respect to the inner hub preform 312. More specifically, the outer shell preform 308 and the second outer shell preform 309 are shifted in the first assembly reference layout direction 428, and in the second assembly reference layout direction 429 orthogonal to the first assembly reference layout direction 428. The shifting increases a distance 668 in the second assembly reference layout direction 429 between the outer shell preform 308 and the inner hub preform 312, and increases a distance 670 between the outer shell preform 308 and the second outer shell preform 309. The shifting also shifts the first strut portion 632 of each of the continuing strut warp fiber tows 623 from extending along the first assembly reference layout direction 428 to extending in the second assembly reference layout direction 429, and shifts the second strut portion 636 of each of the continuing strut warp fiber tows 623 from extending along the first assembly reference layout direction 428 to extending in the second assembly reference layout direction 429.

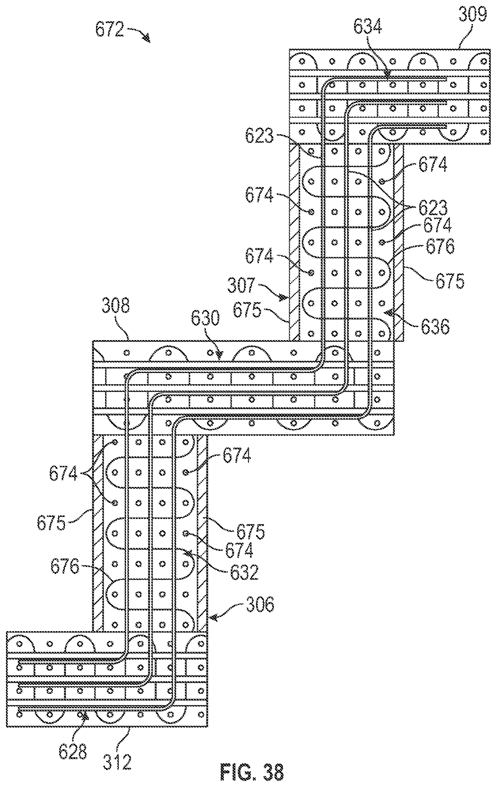

FIG. 38 is an enlarged view of a portion of the assembly layout of FIG. 37, taken at detail view 672 of FIG. 37, according to an aspect of the present disclosure. In FIG. 38, in continuing to form each of the strut preforms 306 and the outer strut preforms 307, following the integral weaving of the continuing strut warp fiber tows 623 as described above, strut weft fiber tows 674 and strut interlocking fiber tows 676 are woven within the first strut portion 632 and within the second strut portion 636 with the continuing strut warp fiber tows 623. In a manner similar to that described above for FIG. 17 and FIG. 18, the strut weft fiber tows 674 are woven in the second direction into and out of the page of FIG. 38. The weaving of the strut weft fiber tows 674 and the strut interlocking fiber tows 676 with the continuing strut warp fiber tows 623 defines the strut preform 306 and the outer strut preform 307. In addition, additional preform layers 675 may be added to the first strut portion 632 to form an airfoil shape of the strut preform 306, and additional preform layers 675 may also be added to the second strut portion 636 to form an airfoil shape of the outer strut preform 307.

Referring back to FIG. 37, in the same manner described above for FIG. 23, the first inner hub connecting end 320 of the inner hub preform 312 is extended in the generally circumferential direction 502 with respect to the vane structure centerline axis 101' and the second inner hub connecting end 322 of the inner hub preform 312 is extended in the generally circumferential direction 504 with respect to the vane structure centerline axis 101', and the first inner hub connecting end 320 and the second inner hub connecting end 322 are connected together as described above with regard to FIG. 13 to FIG. 15 to form the inner hub hoop preform 314. In addition, the first outer shell connecting end 316 of the outer shell preform 308 is extended in the generally circumferential direction 506 with respect to the vane structure centerline axis 101' and the second outer shell connecting end 318 of the outer shell preform 308 is extended in the generally circumferential direction 508 with respect to the vane structure centerline axis 101', and the first outer shell connecting end 316 and the second outer shell connecting end 318 are connected together as described above with regard to FIG. 10 to FIG. 12 to form the outer shell hoop preform 310. In extending the outer shell preform 308, the undulations 451 are also extended apart. Further, the first second outer shell connecting end 578 of the second outer shell preform 309 is extended in a generally circumferential direction 678 with respect to the vane structure centerline axis 101' and the second second outer shell connecting end 580 of the second outer shell preform 309 is extended in a generally circumferential direction 680 with respect to the vane structure centerline axis 101', and the first second outer shell connecting end 578 and the second second outer shell connecting end 580 are connected together to form the second outer shell hoop preform 311 (FIG. 30). In extending the second outer shell preform 309, the undulations 629 are also extended apart.

Once the alternate preform assembly 300a is formed as described above with regard to FIG. 31 to FIG. 38, the alternate preform assembly 300a may be inserted into a mold tooling structure similar to the mold tooling structure 510 of FIG. 25. Additional preform layers may also be added to the alternate preform assembly 300a in a similar manner to the additional preform layers 522 (FIG. 26), the additional preform layers 526 (FIG. 26), and the additional preform layers 532 (FIG. 27) as described above with regard to FIG. 26 and FIG. 27. Then, in the same manner described above for FIG. 25, a matrix material may be injected into the mold tooling structure, and a curing process can be applied to obtain a composite component corresponding to the alternate preform assembly 300a.

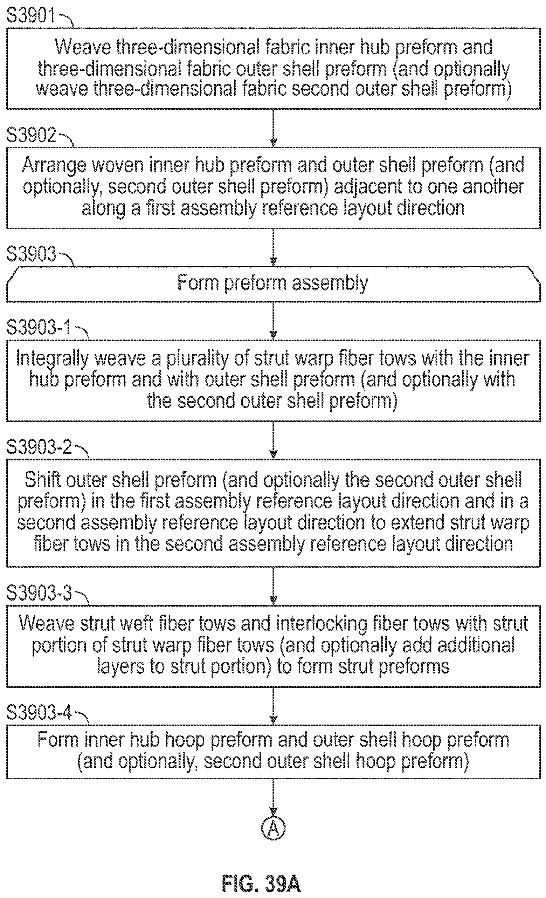

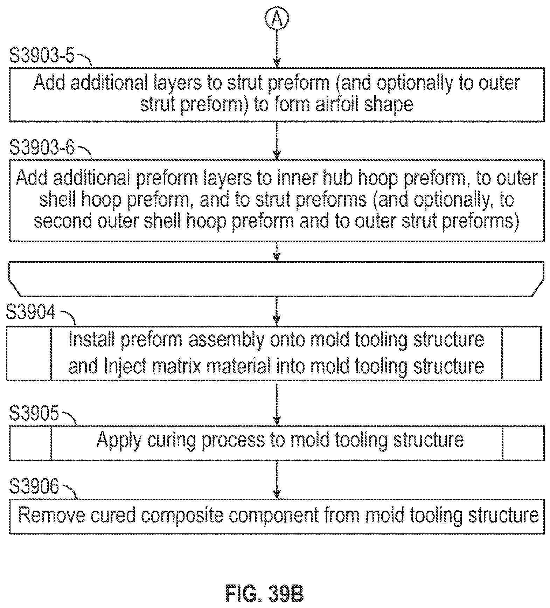

FIG. 39A and FIG. 39B, together, depict a flowchart of process steps for a method of manufacturing a composite component, according to an aspect of the present disclosure. The method described herein may be implemented to form the vane structure 161 as described above with regard to any of FIG. 1 to FIG. 38. In step S3901, the three-dimensional fabric inner hub preform 312 (FIG. 8) is woven as described above with regard to FIG. 8, and FIG. 17, as well as any of FIG. 2A to FIG. 2D. In addition, the three-dimensional outer shell preform 308 (FIG. 9) is woven as described above with regard to FIG. 9 and FIG. 18, as well as any of FIG. 2A to FIG. 2D. Further, in the case when the alternate preform assembly 300a (FIG. 30) is to be formed, the three-dimensional fabric second outer shell preform 309 (FIG. 31) is woven as described above with regard to FIG. 31 and FIG. 32, as well as any of FIG. 2A to FIG. 2D.

In step S3902, as described above with regard to FIG. 19, the three-dimensional fabric inner hub preform 312 (FIG. 9) is arranged to extend in the first assembly reference layout direction 428 (e.g., arranged to extend in a lengthwise direction), and the three-dimensional fabric outer shell preform 308 (FIG. 8) is arranged adjacent to the three-dimensional fabric inner hub preform 312 and to extend in the first assembly reference layout direction 428. The outer shell preform 308 and the inner hub preform 312 are arranged adjacent to one another for, as will be described below, integrally weaving a plurality of the strut warp fiber tows 458 with the inner hub preform 312 and with the outer shell preform 308 for forming the strut preforms 306. In addition, in the case when the alternate preform assembly 300a is to be formed, as was described above with regard to FIG. 31, the three-dimensional woven second outer shell preform 309 is arranged adjacent to the second side 576 of the outer shell preform 308 (the inner hub preform 312 being arranged adjacent to the first side 574 of the outer shell preform 308), and is arranged to extend in the first assembly reference layout direction 428.

In step S3903, the preform assembly 300 (FIG. 7), or the alternate preform assembly 300a, is formed. In a first step S3903-1 in forming the preform assembly 300, as was described above with regard to FIG. 20 through FIG. 22, the plurality of strut warp fiber tows 458 are integrally woven with the inner hub preform 312 and with the outer shell preform 308. That is, as was described above with regard to FIG. 20 to FIG. 22, each of the strut warp fiber tows 458 is integrally woven with the inner hub preform 312 via the first-connection portion 460, and is integrally woven with the outer shell preform 308 via the second-connection portion 462, while the strut portion 464 is woven to extend in the first assembly reference layout direction 428. The integral weaving process is performed for each of the strut preforms 306 to be formed extending between the inner hub preform 312 and the outer shell preform 308. In the case when the alternate preform assembly 300a is to be formed, as described above with regard to FIG. 33 to FIG. 36, the plurality of continuing strut warp fiber tows 623 are integrally woven with the inner hub preform 312, with the outer shell preform 308, and with the second outer shell preform 309 for forming each of the strut preforms 306 and for forming each of the outer strut preforms 307.

In step S3903-2, as was described above with regard to FIG. 23, the outer shell preform 312 is shifted, from the arrangement of FIG. 20 to the arrangement of FIG. 23, in the first assembly reference layout direction 428 and in the second assembly reference layout direction 429 to increase the distance 494 between the inner hub preform 312 and the outer shell preform 308, and to extend the strut portion 464 of each of the plurality of strut warp fiber tows 458 in the second assembly reference layout direction 429. Alternatively, in the case when the alternate preform assembly 300a is to be formed, in step S3903-2, as was described above with regard to FIG. 37, the second outer shell preform 309 is also shifted in the first assembly reference layout direction 428 and in the second assembly reference layout direction 429 to increase the distance 670 between the outer shell preform 308 and the second outer shell preform 309, and to extend the second strut portion 636 of each of the continuing strut warp fiber tows 623 in the second assembly reference layout direction 429.

In step S3903-3, as was described above with regard to FIG. 24, the strut weft fiber tows 496 and the strut interlocking fiber tows 498 are woven with the strut warp fiber tows 458 in each strut portion 464 to form the strut preform 306. Further, the additional preform layers 499 may be added to the strut portion 464 to form an airfoil shape for each of the strut preforms 306. As was described above with regard to FIG. 38, in the case when the alternate preform assembly 300a is to be formed, the strut weft fiber tows 674 and the strut interlocking fiber tows 676 are woven with the continuing strut warp fiber tows 623 in the first strut portion 632 to form the strut preforms 306, and the strut weft fiber tows 674 and the strut interlocking fiber tows 676 are woven with the continuing strut warp fiber tows 623 in the second strut portion 636 to form the outer strut preforms 307. In addition, the additional preform layers 675 may be added to the first strut portion 632 to form the airfoil shape of the strut preform 306, and the additional preform layers 675 may be added to the second strut portion 636 to form the airfoil shape of the outer strut preform 307. While step S3903-2 is described as being performed following step S3903-2, the processes of step S3903-3 may be performed at a later stage of the manufacturing process, such as after step S3903-4 below, or after the preform assembly 300 is inserted into the mold tooling structure 510 as was described above for FIG. 25.

In step S3903-4, as was described above with regard to FIG. 23, the inner hub hoop preform 314 is formed by shifting the first inner hub connecting end 320 in the generally circumferential direction 502 and shifting the second inner hub connecting end 322 in the generally circumferential direction 504, and then forming the inner hub connection 346 as described above for FIG. 15. Similarly, as was described above with regard to FIG. 23, the outer shell hoop preform 310 is formed by shifting the first outer shell connecting end 316 in the generally circumferential direction 506 and shifting the second outer shell connecting end 318 in the generally circumferentially direction 508, and then forming the outer shell connection 332 as was described above with regard to FIG. 12. In step S3903-4, when the inner hub hoop preform 314 is formed, and the outer shell hoop preform 310 is formed, the strut preforms 306 extend between the inner hub hoop preform 314 and the outer shell hoop preform 310 to form the preform assembly 300 as shown in FIG. 7. The preform assembly 300 may then be installed in the mold tooling structure 510, or additional processing may be performed first before the preform assembly 300 is installed in the mold tooling structure.

For example, in step S3903-5, the additional preform layers 499 (FIG. 24) may be added to each of the strut preforms 306, if not previously added in step S3903-3, before the preform assembly 300 is installed in the mold tooling structure 510, or they may be added after the preform assembly 300 is installed in the mold tooling structure 510. Similarly, in the case when the alternate preform assembly 300a is to be formed, in step S3903-5, the additional preform layers 675 (FIG. 38) may be added to each of the strut preforms 306 and to the strut preforms 307, if not previously added in step S3903-3, before the alternate preform assembly 300a is installed in the mold tooling structure 510, or they may be added after the alternate preform assembly 300a is installed in the mold tooling structure 510.

In step S3903-6, as was described above with regard to FIG. 26 and FIG. 27, the additional preform layers 522 may be added to the outer shell hoop preform 310, or the additional preform layers 526 may be added to the inner hub hoop preform 314. Further, the additional preform layers 532 may be added to the preform assembly 300. The additional preform layers 522, the additional preform layers 526, and the additional preform layers 532 may also be added to the alternate preform assembly 300a.

In step S3904, once the preform assembly 300, or the alternate preform assembly 300a, has been formed in step S3903, and the preform assembly 300, or the alternate preform assembly 300a, is installed in the mold tooling structure 510 as was described above with regard to FIG. 25, and the matrix material is injected into the mold tooling structure 510. In step S3905, as was described above with regard to FIG. 25, the curing process is applied to the mold tooling structure 510, and, in step S3906, the cured composite component is removed from the mold tooling structure 510 and additional processing (e.g., final machining) may be performed on the composite component.

The foregoing aspects provide a technique for manufacturing a three-dimensional woven preform structure for a vane structure of a gas turbine engine. The process of weaving the strut warp fiber tows integrally with the inner hub preform and the outer shell preform, and then shifting the inner hub preform and the outer shell preform with respect to one another provides an easier way to manufacture the strut preforms before forming the inner hub hoop preform and the outer shell hoop preform.

Further aspects of the present disclosure are provided by the subject matter of the following clauses.

A method of manufacturing a composite component for a gas turbine engine, the composite component including an outer shell, an inner hub, and a plurality of struts connecting the outer shell and the inner hub, the method includes arranging a woven three-dimensional fabric outer shell preform along a first assembly reference layout direction, arranging a woven three-dimensional fabric inner hub preform along the first assembly reference layout direction and adjacent to a first side of the outer shell preform, forming a preform assembly by: integrally weaving a plurality of strut fiber tows with the outer shell preform and with the inner hub preform to form at least one strut preform extending between the outer shell preform and the inner hub preform, each of the plurality of the strut fiber tows including (a) a first-connection portion being woven with the inner hub preform to extend in a first direction with respect to the first assembly reference layout direction, (b) a second-connection portion being woven with the outer shell preform to extend in a second direction opposite the first direction with respect to the first assembly reference layout direction, and (c) a strut portion defined between the first-connection portion and the second-connection portion, and extending between the outer shell preform and the inner hub preform, the strut portion being arranged to extend along the first assembly reference layout direction, and the first-connection portion and the second-connection portion being arranged offset from one another in the first assembly reference layout direction, and after integrally weaving the plurality of strut fiber tows to form the at least one strut preform, shifting the outer shell preform with respect to the inner hub preform in the first assembly reference layout direction and in a second assembly reference layout direction orthogonal to the first assembly reference layout direction to increase a distance in the second assembly reference layout direction between the outer shell preform and the inner hub preform, and to shift the strut portion of the plurality of strut fiber tows from extending along the first assembly reference layout direction to extending in the second assembly reference layout direction, installing the preform assembly onto a mold tooling structure, injecting a matrix material into the mold tooling structure, and applying a curing process to the mold tooling structure to obtain a molded composite component.

A method of manufacturing a composite component for a gas turbine engine, the composite component including an outer shell, an inner hub, and a plurality of struts connecting the outer shell and the inner hub, the method comprising: arranging a woven three-dimensional fabric outer shell preform along a first assembly reference layout direction; arranging a woven three-dimensional fabric inner hub preform along the first assembly reference layout direction and adjacent to a first side of the outer shell preform; forming a preform assembly by: integrally weaving a plurality of strut fiber tows with the outer shell preform and with the inner hub preform to form at least one strut preform extending between the outer shell preform and the inner hub preform, each of the plurality of the strut fiber tows including (a) a first-connection portion being woven with the inner hub preform to extend in a first direction with respect to the first assembly reference layout direction, (b) a second-connection portion being woven with the outer shell preform to extend in a second direction opposite the first direction with respect to the first assembly reference layout direction, and (c) a strut portion defined between the first-connection portion and the second-connection portion, and extending between the outer shell preform and the inner hub preform, the strut portion being arranged to extend along the first assembly reference layout direction, and the first-connection portion and the second-connection portion being arranged offset from one another in the first assembly reference layout direction; and after integrally weaving the plurality of strut fiber tows to form the at least one strut preform, shifting the outer shell preform with respect to the inner hub preform in the first assembly reference layout direction and in a second assembly reference layout direction orthogonal to the first assembly reference layout direction to increase a distance in the second assembly reference layout direction between the outer shell preform and the inner hub preform, and to shift the strut portion of the plurality of strut fiber tows from extending along the first assembly reference layout direction to extending along the second assembly reference layout direction; installing the preform assembly onto a mold tooling structure; and applying a curing process to the mold tooling structure to obtain a molded composite component.

The method according to the preceding clause, wherein the plurality of strut fiber tows are strut warp fiber tows, and the integrally weaving the plurality of strut fiber tows to form the at least one strut preform further includes, in the strut portion, weaving a plurality of strut weft fiber tows with the plurality of strut warp fiber tows, and weaving a plurality of interlocking fiber tows with the strut warp fiber tows and with the strut weft fiber tows.

The method according to any preceding clause, wherein, at the first-connection portion, respective ones of the plurality of strut fiber tows are woven with a respective inner hub fiber tow layer, and at the second-connection portion, respective ones of the plurality of strut fiber tows are woven with a respective outer shell fiber tow layer.

The method according to any preceding clause, wherein the composite component is one of an outlet guide vane structure, an inlet guide vane structure, or a stator vane structure.

The method according to any preceding clause, wherein the at least one strut preform comprises a plurality of strut preforms, and the plurality of strut fiber tows are woven with the inner hub preform to provide an equal spacing along the inner hub preform between each of the plurality of strut preforms with respect to the first assembly reference layout direction.

The method according to any preceding clause, wherein the plurality of strut fiber tows are woven with the outer shell preform to provide an equal spacing along the outer shell preform between each of the plurality of strut preforms with respect to the first assembly reference layout direction.

The method according to any preceding clause, wherein each of the plurality of strut fiber tows is a continuous strut fiber tow that is alternately woven with the outer shell preform and the inner hub preform to define a plurality of first-connection portions, a plurality of second-connection portions, and a plurality of strut portions to form a plurality of strut preforms.

The method according to any preceding clause, wherein, each of the plurality of continuous strut fiber tows is woven to define, in order (i) a first first-connection portion, (ii) a first strut portion, (iii) a first second-connection portion, (iv) a first cut portion, (v) a second first-connection portion, (vi) a second strut portion, and (vii) a second second-connection portion, wherein the first cut portion extends between the first second-connection portion and the second first-connection portion to connect the outer shell preform and the inner hub preform, and, prior to the shifting the outer shell preform with respect to the inner hub preform, the first cut portion is severed.

The method according to any preceding clause, wherein the arranging the woven three-dimensional fabric outer shell preform along the first assembly reference layout direction includes providing undulations in the outer shell preform.

The method according to any preceding clause, wherein the composite component further includes a second outer shell, and a second plurality of struts connecting the second outer shell and the outer shell, the method further comprising: arranging a woven three-dimensional fabric second outer shell preform to be adjacent to a second side of the outer shell preform opposite to the first side, and to extend along the first assembly reference layout direction, wherein each of the plurality of strut fiber tows is a continuing strut fiber tow extending beyond the second-connection portion, and the integrally weaving further includes integrally weaving the plurality of continuing strut fiber tows with the second outer shell preform to form at least one outer strut preform extending between the outer shell preform and the second outer shell preform, each of the continuing strut fiber tows further including (d) a third-connection portion being woven with the second outer shell preform to extend in the second direction with respect to the first assembly reference layout direction, and (e) an outer strut portion defined between the second-connection portion and the third-connection portion, the outer strut portion being arranged to extend along the first assembly reference layout direction, and the second-connection portion and the third-connection portion being arranged offset from one another in the first assembly reference layout direction.

The method according to any preceding clause, wherein the arranging the woven three-dimensional fabric outer shell preform along the first assembly reference layout direction includes providing undulations in the outer shell preform, and the arranging the woven three-dimensional fabric second outer shell preform to be adjacent to the second side of the outer shell preform opposite to the first side, and to extend along the first assembly reference layout direction includes providing undulations in the second outer shell preform.

The method according to any preceding clause, wherein the shifting further includes shifting the second outer shell preform with respect to the outer shell preform in the first assembly reference layout direction and in the second assembly reference layout direction to increase a distance in the second assembly reference layout direction between the second outer shell preform and the outer shell preform, and to shift the outer strut portion of the plurality of continuing strut fiber tows from extending along the first assembly reference layout direction to extending in the second assembly reference layout direction.

The method according to any preceding clause further comprising forming an inner hub hoop preform by connecting a first inner hub connecting end of the inner hub preform and a second inner hub connecting end of the inner hub preform together, forming an outer shell preform by connecting a first outer shell connecting end of the outer shell preform and a second outer shell connecting end of the outer shell preform together, and forming a second outer shell hoop preform by connecting a first second outer shell connecting end of the second outer shell preform and a second second outer shell connecting end of the second outer shell preform together.

The method according to any preceding clause further, including prior to the arranging of the woven three-dimensional fabric outer shell preform, weaving the outer shell preform as the three-dimensional fabric outer shell preform, the outer shell preform including a first outer shell connecting end and a second outer shell connecting end, the outer shell preform being woven to include a plurality of outer shell fiber tow layers, and prior to the arranging of the woven three-dimensional fabric inner hub preform, weaving the inner hub preform as the woven three-dimensional fabric inner hub preform, the inner hub preform including a first inner hub connecting end and a second inner hub connecting end, the inner hub preform being woven to include a plurality of inner hub fiber tow layers.

The method according to any preceding clause, wherein the forming the preform assembly further includes (1) connecting the first outer shell connecting end and the second outer shell connecting end to form an outer shell hoop preform, and (2) connecting the first inner hub connecting end and the second inner hub connecting end to form an inner hub hoop preform.

The method according to any preceding clause further including adding at least one additional preform layer to at least one of the outer shell hoop preform, the inner hub hoop preform, or to at least one of the plurality of strut preforms, to increase a thickness of the respective preform.

The method according to any preceding clause, wherein the at least one additional preform layer is added to at least one of the plurality of strut preforms to form an airfoil shape structure.

The method according to any preceding clause, wherein the first outer shell connecting end and the second outer shell connecting end are connected together to form an outer shell connection, and the first inner hub connecting end and the second inner hub connecting end are connected together to form the inner hub connection.

The method according to any preceding clause, wherein the first outer shell connecting end includes a first outer shell scarf joint connecting portion and the second outer shell connecting end includes a second outer shell scarf joint connecting portion, the first outer shell scarf joint connecting portion and the second outer shell scarf joint connecting portion being connected together to form the outer shell connection and to form the outer shell hoop preform.

The method according to any preceding clause, wherein the first inner hub connecting end includes a first inner hub scarf joint connecting portion and the second inner hub connecting end includes a second inner hub scarf joint connecting portion, the first inner hub scarf joint connecting portion and the second inner hub scarf joint connecting portion being connected together to form an inner hub connection and to form the inner hub hoop preform.

The method according to any preceding clause, wherein the first outer shell connecting end includes a plurality of first end bifurcated layers, and the second outer shell connecting end includes a plurality of second end bifurcated layers, the plurality of first end bifurcated layers and the plurality of second end bifurcated layers being joined together in an overlapping manner to form the outer shell connection and to form the outer shell hoop preform.

The method according to any preceding clause, wherein the first inner hub connecting end includes a plurality of first end bifurcated layers, and the second inner hub connecting end includes a plurality of second end bifurcated layers, the plurality of first end bifurcated layers and the plurality of second end bifurcated layers being joined together in an overlapping manner to form the inner hub connection and to form the inner hub hoop preform.

The method according to any preceding clause, wherein the integrally weaving further includes integrally weaving the plurality of continuing strut fiber tows (f) to extend from the third-connection portion of the second outer shell through the outer shell to define a first cut portion between the second outer shell and the outer shell, (g) to extend from the outer shell to the inner hub to define a second cut portion between the outer shell and the inner hub, (h) to extend through the inner hub to define a second first-connection portion, (i) to extend from the inner hub to the outer shell to define a second second-connection portion and a second strut portion extending between the inner hub and the outer shell, and (j) to extend from the outer shell to the second outer shell to define a second third-connection portion and a second outer strut portion extending between the outer shell and the second outer shell, the first cut portion and the second cut portion being cut thereafter to disconnect the first cut portion from extending between the second outer shell and the outer shell, and to disconnect the second cut portion from extending between the outer shell and the inner hub.

A composite component for a gas turbine engine, the composite component including an outer shell, an inner hub, and a plurality of struts connecting the outer shell and the inner hub, the composite component being manufactured by, arranging a woven three-dimensional fabric outer shell preform along a first assembly reference layout direction, arranging a woven three-dimensional fabric inner hub preform along the first assembly reference layout direction and adjacent to a first side of the outer shell preform, forming a preform assembly by: integrally weaving a plurality of strut fiber tows with the outer shell preform and with the inner hub preform to form at least one strut preform extending between the outer shell preform and the inner hub preform, each of the plurality of the strut fiber tows including (a) a first-connection portion being woven with the inner hub preform to extend in a first direction with respect to the first assembly reference layout direction, (b) a second-connection portion being woven with the outer shell preform to extend in a second direction opposite the first direction with respect to the first assembly reference layout direction, and (c) a strut portion defined between the first-connection portion and the second-connection portion, and extending between the outer shell preform and the inner hub preform, the strut portion being arranged to extend along the first assembly reference layout direction, and the first-connection portion and the second-connection portion being arranged offset from one another in the first assembly reference layout direction, and after integrally weaving the plurality of strut fiber tows to form the at least one strut preform, shifting the outer shell preform with respect to the inner hub preform in the first assembly reference layout direction and in a second assembly reference layout direction orthogonal to the first assembly reference layout direction to increase a distance in the second assembly reference layout direction between the outer shell preform and the inner hub preform, and to shift the strut portion of the plurality of strut fiber tows from extending along the first assembly reference layout direction to extending in the second assembly reference layout direction, installing the preform assembly onto a mold tooling structure, injecting a matrix material into the mold tooling structure, and applying a curing process to the mold tooling structure to obtain a molded composite component.

The composite component according to the preceding clause, wherein the plurality of strut fiber tows are strut warp fiber tows, and the integrally weaving the plurality of strut fiber tows to form the at least one strut preform further includes, in the strut portion, weaving a plurality of strut weft fiber tows with the plurality of strut warp fiber tows, and weaving a plurality of interlocking fiber tows with the strut warp fiber tows and with the strut weft fiber tows.

The composite component according to any preceding clause, wherein, at the first-connection portion, respective ones of the plurality of strut fiber tows are woven with a respective inner hub fiber tow layer, and at the second-connection portion, respective ones of the plurality of strut fiber tows are woven with a respective outer shell fiber tow layer.

The composite component according to any preceding clause, wherein the composite component is one of an outlet guide vane structure, an inlet guide vane structure, or a stator vane structure.

The composite component according to any preceding clause, wherein the at least one strut preform comprises a plurality of strut preforms, and the plurality of strut fiber tows are woven with the inner hub preform to provide an equal spacing along the inner hub preform between each of the plurality of strut preforms with respect to the first assembly reference layout direction.

The composite component according to any preceding clause, wherein the plurality of strut fiber tows are woven with the outer shell preform to provide an equal spacing along the outer shell preform between each of the plurality of strut preforms with respect to the first assembly reference layout direction.

The composite component according to any preceding clause, wherein each of the plurality of strut fiber tows is a continuous strut fiber tow that is alternately woven with the outer shell preform and the inner hub preform to define a plurality of first-connection portions, a plurality of second-connection portions, and a plurality of strut portions to form a plurality of strut preforms.

The composite component according to any preceding clause, wherein, each of the plurality of continuous strut fiber tows is woven to define, in order (i) a first first-connection portion, (ii) a first strut portion, (iii) a first second-connection portion, (iv) a first cut portion, (v) a second first-connection portion, (vi) a second strut portion, and (vii) a second second-connection portion, wherein the first cut portion extends between the first second-connection portion and the second first-connection portion to connect the outer shell preform and the inner hub preform, and, prior to the shifting the outer shell preform with respect to the inner hub preform, the first cut portion is severed.

The composite component according to any preceding clause, wherein the composite component further includes a second outer shell, and a second plurality of struts connecting the second outer shell and the outer shell, the method further comprising: arranging a woven three-dimensional fabric second outer shell preform to be adjacent to a second side of the outer shell preform opposite to the first side, and to extend along the first assembly reference layout direction, wherein each of the plurality of strut fiber tows is a continuing strut fiber tow extending beyond the second-connection portion, and the integrally weaving further includes integrally weaving the plurality of continuing strut fiber tows with the second outer shell preform to form at least one outer strut preform extending between the outer shell preform and the second outer shell preform, each of the continuing strut fiber tows further including (d) a third-connection portion being woven with the second outer shell preform to extend in the second direction with respect to the first assembly reference layout direction, and (e) an outer strut portion defined between the second-connection portion and the third-connection portion, the outer strut portion being arranged to extend along the first assembly reference layout direction, and the second-connection portion and the third-connection portion being arranged offset from one another in the first assembly reference layout direction.

The composite component according to any preceding clause, wherein the shifting further includes shifting the second outer shell preform with respect to the outer shell preform in the first assembly reference layout direction and in the second assembly reference layout direction to increase a distance in the second assembly reference layout direction between the second outer shell preform and the outer shell preform, and to shift the outer strut portion of the plurality of continuing strut fiber tows from extending along the first assembly reference layout direction to extending in the second assembly reference layout direction.

The composite component according to any preceding clause further comprising forming an inner hub hoop preform by connecting a first inner hub connecting end of the inner hub preform and a second inner hub connecting end of the inner hub preform together, forming an outer shell preform by connecting a first outer shell connecting end of the outer shell preform and a second outer shell connecting end of the outer shell preform together, and forming a second outer shell hoop preform by connecting a first second outer shell connecting end of the second outer shell preform and a second second outer shell connecting end of the second outer shell preform together.

The composite component according to any preceding clause further, including prior to the arranging of the woven three-dimensional fabric outer shell preform, weaving the outer shell preform as the three-dimensional fabric outer shell preform, the outer shell preform including a first outer shell connecting end and a second outer shell connecting end, the outer shell preform being woven to include a plurality of outer shell fiber tow layers, and prior to the arranging of the woven three-dimensional fabric inner hub preform, weaving the inner hub preform as the woven three-dimensional fabric inner hub preform, the inner hub preform including a first inner hub connecting end and a second inner hub connecting end, the inner hub preform being woven to include a plurality of inner hub fiber tow layers.

The composite component according to any preceding clause, wherein the forming the preform assembly further includes (1) connecting the first outer shell connecting end and the second outer shell connecting end to form an outer shell hoop preform, and (2) connecting the first inner hub connecting end and the second inner hub connecting end to form an inner hub hoop preform.

The composite component according to any preceding clause further including adding at least one additional preform layer to at least one of the outer shell hoop preform, the inner hub hoop preform, or to at least one of the plurality of strut preforms, to increase a thickness of the respective preform.

The composite component according to any preceding clause, wherein the at least one additional preform layer is added to at least one of the plurality of strut preforms to form an airfoil shape structure.

The composite component according to any preceding clause, wherein the first outer shell connecting end and the second outer shell connecting end are connected together to form an outer shell connection, and the first inner hub connecting end and the second inner hub connecting end are connected together to form the inner hub connection.

The composite component according to any preceding clause, wherein the first outer shell connecting end includes a first outer shell scarf joint connecting portion and the second outer shell connecting end includes a second outer shell scarf joint connecting portion, the first outer shell scarf joint connecting portion and the second outer shell scarf joint connecting portion being connected together to form the outer shell connection and to form the outer shell hoop preform.

The composite component according to any preceding clause, wherein the first inner hub connecting end includes a first inner hub scarf joint connecting portion and the second inner hub connecting end includes a second inner hub scarf joint connecting portion, the first inner hub scarf joint connecting portion and the second inner hub scarf joint connecting portion being connected together to form an inner hub connection and to form the inner hub hoop preform.

The composite component according to any preceding clause, wherein the first outer shell connecting end includes a plurality of first end bifurcated layers, and the second outer shell connecting end includes a plurality of second end bifurcated layers, the plurality of first end bifurcated layers and the plurality of second end bifurcated layers being joined together in an overlapping manner to form the outer shell connection and to form the outer shell hoop preform.

The composite component according to any preceding clause, wherein the first inner hub connecting end includes a plurality of first end bifurcated layers, and the second inner hub connecting end includes a plurality of second end bifurcated layers, the plurality of first end bifurcated layers and the plurality of second end bifurcated layers being joined together in an overlapping manner to form the inner hub connection and to form the inner hub hoop preform.

The composite component according to any preceding clause, wherein the integrally weaving further includes integrally weaving the plurality of continuing strut fiber tows (f) to extend from the third-connection portion of the second outer shell through the outer shell to define a first cut portion between the second outer shell and the outer shell, (g) to extend from the outer shell to the inner hub to define a second cut portion between the outer shell and the inner hub, (h) to extend through the inner hub to define a second first-connection portion, (i) to extend from the inner hub to the outer shell to define a second second-connection portion and a second strut portion extending between the inner hub and the outer shell, and (j) to extend from the outer shell to the second outer shell to define a second third-connection portion and a second outer strut portion extending between the outer shell and the second outer shell, the first cut portion and the second cut portion being cut thereafter to disconnect the first cut portion from extending between the second outer shell and the outer shell, and to disconnect the second cut portion from extending between the outer shell and the inner hub.

Although the foregoing description is directed to the preferred embodiments, other variations and modifications will be apparent to those skilled in the art, and may be made without departing from the present disclosure. Moreover, features described in connection with one embodiment may be used in conjunction with other embodiments, even if not explicitly stated above.

## Claims

1. A method of manufacturing a composite component (161') for a gas turbine engine(10), the composite component (161') including an outer shell (165), an inner hub (167), and a plurality of struts (158) connecting the outer shell (165) and the inner hub (167), the method comprising:
arranging (S3902) a woven three-dimensional fabric outer shell preform (308) along a first assembly reference layout direction (428);
arranging (S3902) a woven three-dimensional fabric inner hub preform (312) along the first assembly reference layout direction (428) and adjacent to a first side (574) of the outer shell preform (308);
forming (S3903) a preform assembly (300, 300a) by:
integrally weaving (S3903-1) a plurality of strut fiber tows (458, 622) with the outer shell preform (308) and with the inner hub preform (312) to form at least one strut preform (306) extending between the outer shell preform (308) and the inner hub preform (312), each of the plurality of the strut fiber tows (458, 622) including (a) a first-connection portion (460, 628) being woven with the inner hub preform (312) to extend in a first direction (407) with respect to the first assembly reference layout direction (428), (b) a second-connection portion (462, 630) being woven with the outer shell preform (308) to extend in a second direction (381) opposite the first direction (407) with respect to the first assembly reference layout direction (428), and (c) a strut portion (464, 632) defined between the first-connection portion (460, 628) and the second-connection portion (462, 630), and extending between the outer shell preform (308) and the inner hub preform (312), the strut portion (464) being arranged to extend along the first assembly reference layout direction (428), and the first-connection portion (460, 628) and the second-connection portion (462, 630) being arranged offset from one another in the first assembly reference layout direction (428); and
after integrally weaving (S3903-1) the plurality of strut fiber tows (458) to form the at least one strut preform (306), shifting (S3903-2) the outer shell preform (308) with respect to the inner hub preform (312) in the first assembly reference layout direction (428) and in a second assembly reference layout direction (429) orthogonal to the first assembly reference layout direction (428) to increase a distance in the second assembly reference layout direction (429) between the outer shell preform (308) and the inner hub preform (312), and to shift the strut portion (464, 632) of the plurality of strut fiber tows (458, 622) from extending along the first assembly reference layout direction (428) to extending in the second assembly reference layout direction (429);
installing (S3904) the preform assembly onto a mold tooling structure (510);
injecting (S3904) a matrix material into the mold tooling structure (510); and
applying (S3905) a curing process to the mold tooling structure (510) to obtain a molded composite component.

2. The method according to claim 1, wherein the plurality of strut fiber tows (458) are strut warp fiber tows (458), and the integrally weaving (S3903-1) the plurality of strut fiber tows (458) to form the at least one strut preform (306) further includes, in the strut portion (464), weaving (S3903-3) a plurality of strut weft fiber tows (496) with the plurality of strut warp fiber tows (458), and weaving (S3903-3) a plurality of interlocking fiber tows (498) with the strut warp fiber tows (458) and with the strut weft fiber tows (496).

3. The method according to any preceding claim, wherein, at the first-connection portion (460), respective ones of the plurality of strut fiber tows (458) are woven with a respective inner hub fiber tow layer (408, 410, 412), and at the second-connection portion (462), respective ones of the plurality of strut fiber tows (458) are woven with a respective outer shell fiber tow layer (382, 384, 386).

4. The method according to any preceding claim, wherein the composite component (161 ') is one of an outlet guide vane structure (161), an inlet guide vane structure, or a stator vane structure.

5. The method according to claim 1, wherein the at least one strut preform (306) comprises a plurality of strut preforms (306, 306a, 306b, 306c, 306d), and the plurality of strut fiber tows (458) are woven with the inner hub preform (312) to provide an equal spacing (448) along the inner hub preform (308) between each of the plurality of strut preforms (306) with respect to the first assembly reference layout direction (428), and alternatively,
wherein the plurality of strut fiber tows (458) are woven with the outer shell preform (308) to provide an equal spacing (446) along the outer shell preform (308) between each of the plurality of strut preforms (306) with respect to the first assembly reference layout direction (428).

6. The method according to claim 1, wherein each of the plurality of strut fiber tows (458) is a continuous strut fiber tow (458a) that is alternately woven with the outer shell preform (308) and the inner hub preform (312) to define a plurality of first-connection portions (538), a plurality of second-connection portions (540), and a plurality of strut portions (542) to form a plurality of strut preforms (306).

7. The method according to claim 6, wherein, each of the plurality of continuous strut fiber tows (458a) is woven to define, in order (i) a first first-connection portion (546), (ii) a first strut portion (548), (iii) a first second-connection portion (550), (iv) a first cut portion (552), (v) a second first-connection portion (544), (vi) a second strut portion (556), and (vii) a second second-connection portion (558), wherein the first cut portion (552) extends between the first second-connection portion (550) and the second first-connection portion (544) to connect the outer shell preform (308) and the inner hub preform (312), and, prior to the shifting (S3903-2) the outer shell preform (308) with respect to the inner hub preform (312), the first cut portion (552) is severed.

8. The method according to any preceding claim, wherein the composite component (161a) further includes a second outer shell (176), and a second plurality of struts (178) connecting the second outer shell (176) and the outer shell (165), the method further comprising:
arranging (S3902) a woven three-dimensional fabric second outer shell preform (309) to be adjacent to a second side (576) of the outer shell preform (308) opposite to the first side (574), and to extend along the first assembly reference layout direction (428),
wherein each of the plurality of strut fiber tows (622) is a continuing strut fiber tow (623) extending beyond the second-connection portion (630), and the integrally weaving (S3903-1) further includes integrally weaving the plurality of continuing strut fiber tows (623) with the second outer shell preform (309) to form at least one outer strut preform (307) extending between the outer shell preform (308) and the second outer shell preform (309), each of the continuing strut fiber tows (623) further including (d) a third-connection portion (634) being woven with the second outer shell preform (309) to extend in the second direction (381) with respect to the first assembly reference layout direction (428), and (e) an outer strut portion (636) defined between the second-connection portion (630) and the third-connection portion (634), the outer strut portion (636) being arranged to extend along the first assembly reference layout direction (428), and the second-connection portion (630) and the third-connection portion (634) being arranged offset from one another in the first assembly reference layout direction (428).

9. The method according to claim 8, wherein the shifting (S3903-2) further includes shifting the second outer shell preform (309) with respect to the outer shell preform (308) in the first assembly reference layout direction (428) and in the second assembly reference layout direction (429) to increase a distance in the second assembly reference layout direction (429) between the second outer shell preform (309) and the outer shell preform (308), and to shift the outer strut portion (636) of the plurality of continuing strut fiber tows (623) from extending along the first assembly reference layout direction (428) to extending in the second assembly reference layout direction (429), and alternatively,
further comprising forming an inner hub hoop preform (314) by connecting a first inner hub connecting end (320) of the inner hub preform (312) and a second inner hub connecting end (322) of the inner hub preform (312) together, forming an outer shell hoop preform (310) by connecting a first outer shell connecting end (316) of the outer shell preform (308) and a second outer shell connecting end (318) of the outer shell preform (308) together, and forming a second outer shell hoop preform (311) by connecting a first second outer shell connecting end (578) of the second outer shell preform (309) and a second second outer shell connecting end (580) of the second outer shell preform (309) together.

10. The method according to any preceding claim, further comprising:
prior to the arranging (S3902) of the woven three-dimensional fabric outer shell preform (308), weaving (S3901) the outer shell preform (302) as the three-dimensional fabric outer shell preform (308), the outer shell preform (308) including a first outer shell connecting end (316) and a second outer shell connecting end (318), the outer shell preform (308) being woven to include a plurality of outer shell warp fiber tow layers (382, 384, 386); and
prior to the arranging (S3902) of the woven three-dimensional fabric inner hub preform (312), weaving the inner hub preform (304) as the woven three-dimensional fabric inner hub preform (312), the inner hub preform (312) including a first inner hub connecting end (320) and a second inner hub connecting end (322), the inner hub preform (312) being woven to include a plurality of inner hub warp fiber tow layers (408, 410, 412).

11. The method according to claim 10, wherein the forming (S3903) the preform assembly (300, 300a) further includes (1) connecting the first outer shell connecting end (316) and the second outer shell connecting end (318) to form an outer shell hoop preform (310), and (2) connecting the first inner hub connecting end (320) and the second inner hub connecting end (322) to form an inner hub hoop preform (314).

12. The method according to claim 11, further comprising adding (S3903-5, S3903-6) at least one additional preform layer (499, 522, 526, 532) to at least one of the outer shell hoop preform (310), the inner hub hoop preform (314), or to at least one of the plurality of strut preforms (306), to increase a thickness of the respective preform, and alternatively,
wherein the at least one additional preform layer (499, 532) is added to at least one of the plurality of strut preforms (306) to form an airfoil shape structure.

13. The method according to any of claim 11-12, wherein the first outer shell connecting end (316) and the second outer shell connecting end (318) are connected together to form an outer shell connection (332, 332a), and the first inner hub connecting end (320) and the second inner hub connecting end (322) are connected together to form the inner hub connection (346, 346a).

14. The method according to claim 13, wherein the first outer shell connecting end (316) includes a first outer shell scarf joint connecting portion (352) and the second outer shell connecting end (318) includes a second outer shell scarf joint connecting portion (354), the first outer shell scarf joint connecting portion (352) and the second outer shell scarf joint connecting portion (354) being connected together to form the outer shell connection (332a) and to form the outer shell hoop preform (310), and alternatively,
wherein the first inner hub connecting end (320) includes a first inner hub scarf joint connecting portion (364) and the second inner hub connecting end (322) includes a second inner hub scarf joint connecting portion (366), the first inner hub scarf joint connecting portion (364) and the second inner hub scarf joint connecting portion (366) being connected together to form the inner hub connection (346a) and to form the inner hub hoop preform (314).

15. The method according to claim 13, wherein the first outer shell connecting end (316) includes a plurality of first end bifurcated layers (328), and the second outer shell connecting end (318) includes a plurality of second end bifurcated layers (330), the plurality of first bifurcated layers (328) and the plurality of second end bifurcated layers (330) being joined together in an overlapping manner to form the outer shell connection (332) and to form the outer shell hoop preform (310), and alternatively,
wherein the first inner hub connecting end (320) includes a plurality of first end bifurcated layers (342), and the second inner hub connecting end (322) includes a plurality of second end bifurcated layers (344), the plurality of first end bifurcated layers (342) and the plurality of second end bifurcated layers (344) being joined together in an overlapping manner to form the inner hub connection (346) and to form the inner hub hoop preform (314).
